Europäisches Patentamt

European Patent Office

Office européen des brevets

(19)

(11) **EP 0 866 319 B1**

(12) **EUROPÄISCHE PATENTSCHRIFT**

(45) Veröffentlichungstag und Bekanntmachung des Hinweises auf die Patenterteilung:
**24.11.1999  Patentblatt 1999/47**

(51) Int Cl.$^6$: **G01F 1/84**

(21) Anmeldenummer: **98810174.7**

(22) Anmeldetag: **02.03.1998**

(54) **Mess- und Betriebsschaltung eines Coriolis-Massedurchflussmessers**

Measuring and operating circuit of a Coriolis-type mass flow meter

Circuit de mesure et d'exitation d'un débitmètre massique Coriolis

(84) Benannte Vertragsstaaten:
**CH DE DK ES FR GB IT LI NL**

(30) Priorität: **21.03.1997  EP 97810169**

(43) Veröffentlichungstag der Anmeldung:
**23.09.1998  Patentblatt 1998/39**

(73) Patentinhaber: **Endress + Hauser Flowtec AG**
**CH-4153 Reinach BL 1 (CH)**

(72) Erfinder: **Stadler, Dietmar, Dipl.-Ing. (FH)**
**79618 Rheinfelden-Beuggen (DE)**

(74) Vertreter: **Morstadt, Volker, Dipl.-Ing.**
**Endress + Hauser**
**Zentrale Patentabteilung**
**Postfach 2222**
**79574 Weil am Rhein (DE)**

(56) Entgegenhaltungen:
EP-A- 0 698 783          EP-A- 0 702 212
WO-A-88/02105          DE-A- 19 525 253
US-A- 4 852 409          US-A- 4 934 196
US-A- 5 429 002

**Beschreibung**

Die Erfindung betrifft eine Meß- und Betriebsschaltung eines Coriolis-Massedurchflußmessers.

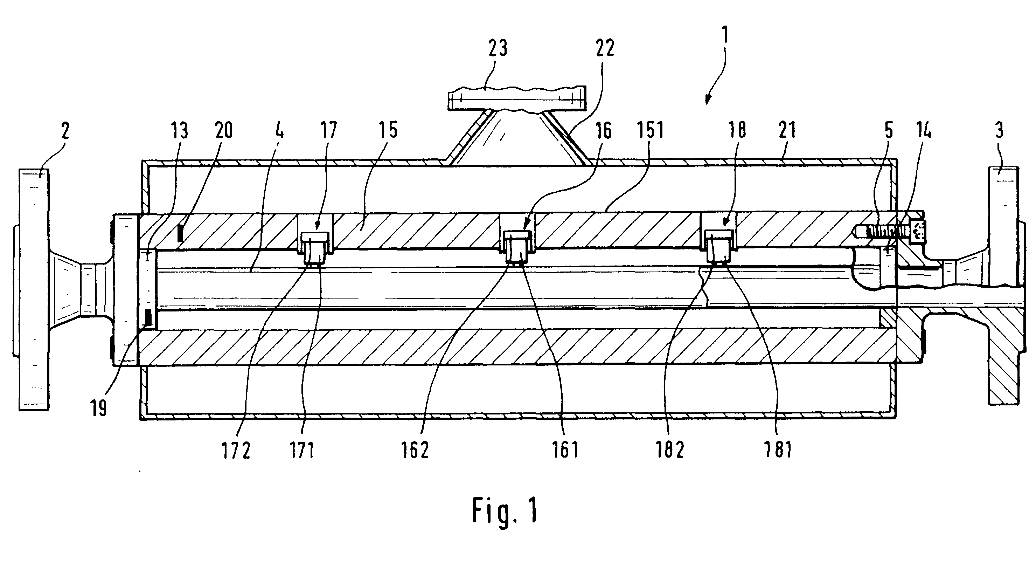

Derartige Massedurchflußmesser haben bekanntlich mindestens ein zu mechanischen Schwingungen erregtes, von einem zu messenden Fluid durchströmtes Meßrohr, das gebogen oder gerade sein kann; Einzelheiten hierzu sind unten in Zusammenhang mit der Erläuterung der Fig. 1 angegeben.

Üblicherweise sind mindestens ein Schwingungserreger sowie mindestens zwei Schwingungssensoren am Meßrohr, letztere in Strömungsrichtung beabstandet voneinander, angeordnet. Das Meßrohr schwingt meist mit einer von seinem Material und seinen Abmessungen vorgegebenen, jedoch von der Dichte des Fluids variierten mechanischen Resonanzfrequenz. In anderen Fällen liegt die Schwingungsfrequenz des Meßrohrs nicht genau bei dessen mechanischer Resonanzfrequenz, sondern in deren Nachbarschaft.

Die Schwingungssensoren geben analoge Sensorsignale ab, deren Frequenz gleich der Schwingungsfrequenz des Meßrohrs ist und die gegeneinander phasenverschoben sind. Eine von den Sensorsignalen gespeiste Meß-Teilschaltung liefert ein dem Massedurchfluß proportionales Signal, und eine Erreger-Teilschaltung speist den Schwingungserreger mit Wechselenergie, deren Frequenz üblicherweise gleich der momentanen Schwingungsfrequenz des Meßrohrs ist.

In der US-A 48 01 897 ist eine Erreger-Teilschaltung beschrieben, die nach Art einer analogen Phase Locked Loop aufgebaut ist, d.h. die Frequenz der Wechselenergie stellt sich automatisch auf die von der Dichte des Fluids variierte momentane mechanische Resonanzfrequenz ein.

Übliche Meß-Teilschaltungen sind entweder analoge und somit im Zeitbereich arbeitende Schaltungen, wie z.B. die in der EP-A 698 783, die der US-Anmeldung S/N 08/514,914 vom 14.08.1995 entspricht, oder die in der US-A 48 95 030 beschriebene Meßschaltung, oder Digital-Schaltungen, wie z.B. die in der US-A 49 34 196, die in der US-A 49 96 871, die in der US-A 50 52 231, die in der US-A 54 29 002 oder die in der EP-A 702 212 beschriebene Meßschaltung.

Von der in der EP-A 698 783 beschriebenen Meßschaltung ist für die Erfindung lediglich von Interesse - weil sie darauf zurückgreift -, daß sie u.a. einen analogen Regelkreis enthält, der die Sensorsignale auf gleiche Amplituden regelt.

Die in der US-A 48 95 030 beschriebene Meßschaltung unterzieht ein aus den beiden Sensorsignalen gebildetes Summensignal und ein aus den beiden Sensorsignalen gebildetes Differenzsignal jeweils einer analogen, auf einer analogen Fourier-Transformation basierenden Filterung und bildet dann aus den so gefilterten Signalen das dem Massedurchfluß proportionale Signal.

Die in der US-A 50 52 231 beschriebene Meßschaltung unterzieht jedes Sensorsignal einer Verstärkung, dann einer jeweiligen Anti-Alias-Filterung, darauf einem jeweiligen verstärkenden Sample/Holding, darauf einer jeweiligen Analog/Digital-Wandlung und schließlich einer jeweiligen diskreten Fourier-Transformation. Aus den so gebildeten Digitalsignalen wird nach einem bestimmten Algorithmus mittels eines Mikroprozessors ein dem Massedurchfluß proportionales Digitalsignal berechnet. Dabei muß die Frequenz eines das erwähnte Sample/Holding steuernden Abtastsignals gleich einem ganzzahligen Vielfachen der mechanischen Resonanzfrequenz des Meßrohrs sein.

Die in der US-A 54 29 002 beschriebene Meßschaltung unterzieht jedes Sensorsignal einem Sample/Holding, darauf einer jeweiligen Analog/Digital-Wandlung und schließlich einer jeweiligen digitalen Verarbeitung, die das Prinzip der Übereinstimmung hinsichtlich der kleinsten Sinus-Fehlerquadrate ("least-squares sine fit") realisiert.

Aus den so gebildeten Digitalsignalen wird nach einem bestimmten Algorithmus mittels eines Mikroprozessors ein dem Massedurchfluß proportionales Digitalsignal berechnet. Dabei muß die Frequenz eines das erwähnte Sample/Holding steuernden Abtastsignals wieder gleich einem ganzzahligen Vielfachen der mechanischen Resonanzfrequenz des Meßrohrs sein.

Nach der in der EP-A 702 212 beschriebenen Meßschaltung wird jedes Sensorsignal und ein daraus gebildetes Summensignal einer jeweiligen Anti-Alias-Filterung unterzogen, darauf einem jeweiligen Sample/Holding, darauf einer jeweiligen Analog/Digital-Wandlung, darauf einer jeweiligen digitalen Bandpaß-Filterung und schließlich einer jeweiligen diskreten Fourier-Transformation.

Aus den so gebildeten Digitalsignalen wird nach einem bestimmten Algorithmus ein dem Massedurchfluß proportionales Digitalsignal berechnet. Auch hier muß wieder die Frequenz eines das erwähnte Sample/Holding steuernden Abtastsignals gleich einem ganzzahligen Vielfachen der mechanischen Resonanzfrequenz des Meßrohrs sein.

Bei den bisher referierten Meßschaltungen wird mehr oder weniger stillschweigend vorausgesetzt, daß die Information über die Größe der momentanen Resonanzfrequenz des Meßrohrs, im wesentlichen also die Information über deren Zahlenwert, auf der analogen Seite der Schaltung immer vorhanden oder auf dieser Seite einfach ermittelbar ist, so daß der Wert dieser Größe in die Bildung des dem Massedurchfluß proportionalen Signals bzw. Digitalsignals, falls erforderlich, einbezogen werden kann. So wird die momentane Resonanzfrequenz z.B. bei der Anordnung nach der erwähnten US-A 54 29 002 mittels eines Nulldurchgang-Detektors ermittelt.

Bei den in der US-A 49 34 136 und in der US-A 49 96 871 beschriebenen Meßschaltungen ist dies jedoch nicht so, vielmehr wird diese Frequenz-Information auf der digitalen Seite erst generiert. Bei diesen Meßschaltungen wird jedes Sensorsignal einer Anti-Alias-Filterung, darauf einem jeweiligen Sample/Holding, darauf einer Analog/Digital-Wandlung und schließlich einer jeweiligen diskreten Fourier-Transformation unterzogen.

Aus den so gebildeten Digitalsignalen wird nach einem bestimmten Algorithmus mittels eines Mikroprozessors ein dem Massedurchfluß proportionales Digitalsignal berechnet. Die Frequenz eines das erwähnte Sample/Holding steuernden Abtastsignals ist - wie erwähnt - nicht mehr gleich einem ganzzahligen Vielfachen der mechanischen Resonanzfrequenz des Meßrohrs, sondern beliebig gewählt.

Die Information über den momentanen Wert der mechanischen Resonanzfrequenz des Meßrohrs wird dadurch gewonnen, daß der Mikroprozessor das Maximum des Leistungsspektrums der Fourier-transformierten Digitalsignale und die zu diesem Maximum gehörende Frequenz, die gleich der Resonanzfrequenz ist, bestimmt.

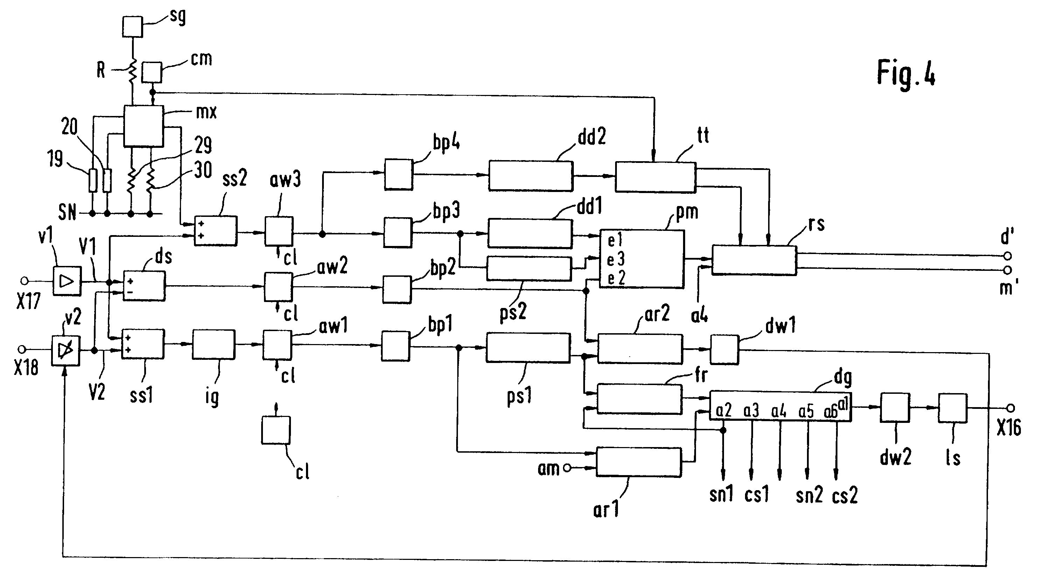

Obwohl die genannten US-A 49 34 196 und US-A 49 96 871 einen Coriolis-Massedurchflußmesser mit umfangreichen Digitalschaltungen beschreiben, wird im übrigen anhand von deren jeweiliger Fig. 4 lediglich eine analoge Erreger-Teilschaltung erläutert.

Die oben referierten einzelnen Vorschläge des Standes der Technik dienen zwar jeweils der Genauigkeitsverbesserung der Messung und/oder der Verbesserung der Unempfindlichkeit gegenüber mechanischen Störschwingungen, die z.B. aus der Rohrleitung stammen, in die der Massedurchflußmesser eingesetzt ist, oder die aufgrund seines mechanischen Designs entstehen können, und/oder der Verbesserung der Unempfindlichkeit gegenüber elektronischen Störsignalen.

Wie Untersuchungen des Erfinders jedoch gezeigt haben, sind Massedurchflußmesser nach dem obigen Stand der Technik den Genauigkeitsanforderungen, wie sie heute vom Markt erwartet werden, noch nicht gewachsen.

Diese Genauigkeit wird im wesentlichen von der Genauigkeit bestimmt, mit der die erläuterte Phasenverschiebung zwischen den Sensorsignalen gemessen werden kann. Es hat sich gezeigt, daß mit der diskreten Fourier-Transformation nach dem Stand der Technik die Genauigkeit dieser Messung der Phasenverschiebung noch unzureichend ist.

Dies beruht hauptsächlich darauf, daß die in den Sensorsignalen enthaltenen Störsignale mittels der Fourier-Transformation nicht ausreichend unterdrückt werden können. Dies wäre nämlich nur möglich, wenn die Frequenz des Abtastsignals mit der Frequenz der Störsignale verkoppelt wäre.

Hinzu kommt, daß die erforderliche, möglichst genaue Verkopplung der Frequenz des Abtastsignals mit der Schwingfrequenz des Meßrohrs nur mit großem Aufwand realisiert werden kann.

Es hat sich ferner gezeigt, daß auch die Messung der Phasenverschiebung nach dem Prinzip des obigen Least Mean Square Sine Fit aus ähnlichen Gründen zu ungenau für Coriolis-Massedurchflußmesser ist.

Es ist daher eine Aufgabe der Erfindung, die Genauigkeit von Coriolis-Massedurchflußmessern weiter zu verbessern, was insb. durch eine Genauigkeitserhöhung der Messung der Phasenverschiebung der Sensorsignale erzielt werden soll. Dabei ist selbstverständlich auf eine möglichst kostengünstige Realisierung zu achten ist.

Zur Lösung des erläuterten Problemkomplexes besteht die Erfindung daher in einer Meß- und Betriebsschaltung eines Coriolis-Massedurchflußmessers mit einem Massedurchflußaufnehmer, der mindestens ein von einem zu messenden Fluid durchströmtes Meßrohr aufweist,

- das im Betrieb mit einer von seinem Material und seinen Abmessungen vorgegebenen, jedoch von der Dichte des Fluids variierten Schwingungsfrequenz schwingt, die gleich der momentanen mechanischen Resonanzfrequenz des Meßrohrs oder dieser benachbart ist,
- an dem ein erster und ein zweiter elektromagnetischer Schwingungssensor, in Strömungsrichtung beabstandet voneinander, sowie ein Schwingungserreger angeordnet sind und
- das von einem Tragrahmen oder einem Trägerrohr umgeben ist,

mit einer Meß-Teilschaltung, die umfaßt:

- einen ersten Verstärker mit fest eingestellter Verstärkung für das Signal des ersten Schwingungssensors,
- einen zweiten Verstärker für das Signal des zweiten Schwingungssensors mit einem Verstärkungs-Steuereingang,
- eine erste Summierstufe für die Ausgangssignale der beiden Verstärker,
- eine der ersten Summierstufe nachgeschaltete Integrierstufe, deren Ausgangssignal gegenüber dem Ausgangssignal der ersten Summierstufe eine Phasenverschiebung von 90° hat,
- eine Differenzstufe für die Ausgangssignale der beiden Verstärker,
- einen der Integrierstufe nachgeschalteten ersten Analog/Digital-Wandler,
- einen der Differenzstufe nachgeschalteten zweiten Analog/Digital-Wandler,
- einen dem ersten Verstärker nachgeschalteten dritten Analog/Digital-Wandler,
- einen Taktoszillator zur Abgabe eines die drei Analog/Digital-Wandler synchron taktenden Abtastsignals,
- einen Digitalprozessor, der dem ersten, dem zweiten und dem dritten Analog/Digital-Wandler nachgeschaltet ist und der ein digitales Massedurchflußsignal an einem ersten Ausgang und/oder ein digitales Dichtesignal an einem zweiten Ausgang sowie ein Verstärkungs-Steuersignal an einem dritten Ausgang erzeugt,

- -- das einem ersten Digital/Analog-Wandler zugeführt ist, dessen Ausgang mit dem Verstärkungs-Steuereingang des zweiten Verstärkers verbunden ist, und

mit einer Erreger-Teilschaltung, die umfaßt:
- - einen Digital-Generator

  - -- mit einem Frequenz-Steuereingang,
  - -- mit einem Amplituden-Steuereingang,
  - -- mit einem ein digitales Erregersignal abgebenden ersten Ausgang,
  - -- mit einem ein digitales erstes Sinus-Signal abgebenden zweiten Ausgang,
  - -- mit einem ein digitales erstes Cosinus-Signal abgebenden dritten Ausgang und
  - -- mit einem ein die momentane Schwingfrequenz darstellendes Digitalsignal abgebenden vierten Ausgang, der mit einem Eingang des Digitalprozessors verbunden ist,

- - einen digitalen Frequenzregler

  - -- mit einem ersten Eingang, der mit dem zweiten Ausgang des Digital-Generators verbunden ist,
  - -- mit einem zweiten Eingang, der mit einem vierten Ausgang des Digitalprozessors verbunden ist, und
  - -- mit einem Ausgang, der mit dem Frequenz-Steuereingang des Digital-Generators verbunden ist,

- - einen ersten digitalen Amplitudenregler

  - -- mit einem ersten Eingang, der mit einem fünften Ausgang des Digitalprozessors verbunden ist,
  - -- mit einem zweiten Eingang, dem ein digitales Amplituden-Einstellsignal zugeführt ist, und
  - -- mit einem Ausgang, der mit dem Amplituden-Steuereingang des Digital-Generators verbunden ist,

- - sowie einen zweiten Digital/Analog-Wandler,

  - -- der dem ersten Ausgang des Digital-Generators nachgeschaltet ist und
  - -- der eine analoge Endstufe ansteuert, die den Schwingungserreger speist.

Nach einer ersten Weiterbildung der Erfindung umfaßt der Digitalprozessor:

- - einen ersten, einen zweiten und einen dritten digitalen Bandpaß,

  - -- die dem ersten bzw. zweiten bzw. dritten Analog/Digital-Wandler nachgeschaltet sind,
  - -- die untereinander einen identischen Aufbau haben,
  - -- deren untere Grenzfrequenz kleiner als die kleinste auftretende Frequenz der Schwingungen des Meßrohrs und deren obere Grenzfrequenz größerr als die größte auftretende Frequenz der Schwingungen des Meßrohrs ist,
  - -- die Ausgangssignaleabgeben, in denen ein den Wert der momentanen mechanischen Schwingfrequenz repräsentierndes Digital-Signal enthalten ist,

- - eine erste digitale Amplitudenmeßstufe

  - -- die dem dritten Bandpaß nachgeschaltet ist,
  - -- mit einem Ausgang, an dem ein Digital-Signal auftritt, das solange konstant ist, wie die Amplitude des Ausgangssignals des dritten Bandpasses konstant ist, und das mit dieser Amplitude identisch ist,

- - eine auf den ersten Bandpaß folgende erste digitale 90°-Phasenschieber- und Normierstufe,
- - eine auf den dritten Bandpaß folgende zweite digitale 90°-Phasenschieber- und Normierstufe,
- - einen digitalen Phasenmesser

  - -- mit einem ersten Eingang, der der ersten Amplitudenmeßstufe nachgeschaltet ist,
  - -- mit einem zweiten Eingang, der dem zweiten Bandpaß nachgeschaltet ist, und

-- mit einem dritten Eingang, der der zweiten 90°-Phasenschieber- und Normierstufe nachgeschaltet ist,

- einen zweiten digitalen Amplitudenregler

    -- mit einem ersten Eingang, der der ersten 90°-Phasenschieber- und Normierstufe nachgeschaltet ist,
    -- mit einem zweiten Eingang, der mit dem Ausgang des zweiten Bandpasses verbunden ist, und
    -- mit einem Ausgang, der mit dem Eingang des ersten Analog/Digital-Wandlersverbunden ist, und

- eine Rechenstufe zur Berechnung des Massedurchflußsignals und/oder des Dichtesignals

    -- mit einem ersten Eingang, der am Ausgang des Phasenmessers liegt,
    -- mit einem zweiten Eingang, der mit dem vierten Ausgang des Digital-Generators verbunden ist,
    -- mit einem ersten Ausgang, an dem das digitale Massedurchflußsignal abnehmbar ist, und
    -- mit einem zweiten Ausgang, an dem das digitale Dichtesignal abnehmbar ist.

Nach einer zweiten Weiterbildung der Erfindung, die auch bei der ersten Weiterbildung abwendbar ist, umfaßt der Massedurchflußaufnehmer einen ersten Temperaturfühler zur Messung der Meßrohr-Temperatur und einen zweiten Temperaturfühler zur Messung der Temperatur des Trägerrohrs oder des Tragrahmens und die Meß- und Betriebsschaltung umfaßt ferner:

- einen ersten und einen zweiten Vergleichswiderstand,
- eine zweite Summierstufe, von der ein erster Eingangs/Ausgangs-Pfad zwischen dem ersten Verstärker und dem dritten Analog/Digital-Wandler eingefügt ist,
- einen Generator für ein analoges Sinussignal, dessen Frequenz außerhalb des Schwingfrequenz-Bereichs des Meßrohrs bzw. der Meßrohre liegt und dem ein Widerstand nachgeschaltet ist,
- einen Multiplexer zur von einem Taktgenerator zyklisch getakteten Durchschaltung des ersten und des zweiten Temperaturfühlers sowie des ersten und des zweiten Vergleichswiderstands zu einem zweiten Eingang der zweiten Summierstufe unter Bildung eines jeweiligen Spannungsteilers mit dem Widerstand,
- einen dem Ausgang des dritten Analog/Digital-Wandlers nachgeschalteten schmalbandigen vierten digitalen Bandpaß, dessen Durchlaßbereich die Frequenz des analogen Sinussignals umfaßt,
- eine zweite digitale Amplitudenmeßstufe,

    -- mit einem Signal-Eingang, der dem vierten Bandpaß nachgeschaltet ist, und
    -- mit einem Ausgang, an dem ein Digital-Signal auftritt, das solange konstant ist, wie die Amplitude des Ausgangs-Signals des vierten Bandpasses konstant ist, und das mit dieser Amplitude identisch ist, und

- eine Temperatursignal-Trennstufe,

    -- von der ein Signal-Eingang am Ausgang der zweiten Amplitudenmeßstufe liegt,
    -- von der ein Steuer-Eingang am Ausgang des Taktgenerators liegt,
    -- mit einem ersten Ausgang, an dem ein der vom ersten Temperaturfühler gemessenen Temperatur entsprechendes Digital-Signal auftritt und der mit einem dritten Eingang der Rechenstufe verbunden ist, sowie
    -- mit einem zweiten Ausgang, an dem ein der vom zweiten Temperaturfühler gemessenen Temperatur entsprechendes Digital-Signal auftritt und der mit einem vierten Eingang der Rechenstufe verbunden ist,
    -- an deren erstem Ausgang ein temperatur-kompensiertes digitales Massedurchflußsignal und
    -- an deren zweitem Ausgang ein temperatur-kompensiertes digitales Dichtesignal abnehmbar ist.

Eine dritte Weiterbildung der Erfindung, die der zweiten Weiterbildung zusätzliche Merkmale hinzufügt, umfaßt:

- eine dritte Summierstufe, von der ein erster Eingangs/Ausgangs-Pfad zwischen der Differenzstufe und dem zweiten Analog/Digital-Wandler eingefügt ist und von der ein zweiter Eingang am Ausgang des Multiplexers liegt,
- einen dem Ausgang des zweiten Analog/Digital-Wandlers nachgeschalteten fünften digitalen Bandpaß, dessen Aufbau mit dem des vierten Bandpasses identisch ist,
- eine dritte digitale Amplitudenmeßstufe, mit einem Signal-Eingang, der dem fünften Bandpaß nachgeschaltet ist, und
- eine Unsymmetrie-Meßstufe

-- mit einem am Ausgang der dritten Amplitudenmeßstufe liegenden Dividend-Eingang,

-- mit einem am Ausgang der zweiten Amplitudenmeßstufe liegenden Divisor-Eingang und

-- mit einem an einem vierten Eingang des Phasenmessers liegenden Ausgang.

Ein Vorteil der Erfindung besteht darin, daß die Genauigkeit, mit der die erläuterte Phasenverschiebung zwischen den Sensorsignalen gemessen werden kann, gegenüber den verschiedenen, oben erörterten Anordnungen des Standes der Technik erheblich verbessert ist. Ebenso ist die Unempfindlichkeit gegenüber Störfrequenzen, die z.B. aus der oben erwähnten Rohrleitung stammen können, wesentlich größer als bei den Anordnungen nach dem Stand der Technik.

Ein weiterer Vorteil der Erfindung besteht darin, daß die Information über die momentane Schwingfrequenz des Meßrohrs bzw. der Meßrohre im digitalen Teil der Meß- und Betriebsschaltung automatisch zur Verfügung steht und nicht wie beim erläuterten Stand der Technik aus den Sensorsignalen erst gebildet werden muß, da die Erreger-Teilschaltung fast vollständig aus Digital-Schaltungen besteht, siehe hierzu Einzelheiten unten.

Die Erfindung und weitere Vorteile werden nun anhand von Ausführungsbeispielen näher erläutert, die in den Figuren der Zeichnung dargestellt sind.

Fig. 1    zeigt eine vertikale, teilweise geschnittene Längsansicht eines Massedurchflußaufnehmers eines Massedurchflußmessers mit einem Meßrohr,

Fig. 2    zeigt nach Art eines Blockschaltbilds eine Meßund Betriebsschaltung für z.B. den Massedurchflußmesser von Fig. 1,

Fig. 3    zeigt nach Art eines Blockschaltbilds eine Ausgestaltung der Schaltung von Fig. 2,

Fig. 4    zeigt nach Art eines Blockschaltbilds eine erste Weiterbildung der Schaltungen der Fig. 2 und 3,

Fig. 5    zeigt nach Art eines Blockschaltbilds die um zusätzliche Funktionen ergänzte Meß- und Betriebsschaltung der Fig. 4,

Fig. 6    zeigt nach Art eines Blockschaltbilds einen bevorzugten Aufbau von Amplitudenmeßstufen,

Fig. 7    zeigt nach Art eines Blockschaltbilds einen bevorzugten Aufbau der 90°-Phasenschieber- und Normierstufen,

Fig. 8    zeigt nach Art eines Blockschaltbilds einen bevorzugten Aufbau eines Phasenmessers,

Fig. 9    zeigt nach Art eines Blockschaltbilds einen bevorzugten Aufbau eines Frequenzreglers,

Fig. 10    zeigt nach Art eines Blockschaltbilds einen bevorzugten Aufbau eines ersten Amplitudenreglers,

Fig. 11    zeigt nach Art eines Blockschaltbilds einen bevorzugten Aufbau eines Digital-Generators,

Fig. 12    zeigt nach Art eines Blockschaltbilds einen bevorzugten Aufbau eines zweiten Amplitudenreglers,

Fig. 13    zeigt nach Art eines Blockschaltbilds einen bevorzugten Aufbau einer Temperatursignal-Trennstufe, und

Fig. 14    zeigt nach Art eines Blockschaltbilds einen bevorzugten Aufbau einer Unsymmetrie-Meßstufe.

In Fig. 1 ist in vertikaler, teilweise geschnittener Längsansicht ein Massedurchflußaufnehmer 1 eines für die Meß -und Betriebsschaltung nach der Erfindung geeigneten Massedurchflußmessers gezeigt, der in den Verlauf einer von einem zu messenden Fluid durchströmten - aus Gründen der Übersichtlichkeit jedoch nicht dargestellten - Rohrleitung eines gegebenen Durchmessers, z.B. über Flansche 2, 3, einzusetzen ist.

Der Massedurchflußaufnehmer 1 von Fig. 1 hat ein einziges gerades Meßrohr 4, dessen fluid-einlaß-seitiges Ende am Flansch 2, z.B. über eine fluid-einlaß-seitige Endplatte 13, und dessen fluid-auslaß-seitiges Ende am Flansch 3, z.B. über eine fluid-auslaß-seitige Endplatte 14, fixiert ist. In die Endplatten 13, 14 ist das Meßrohr 4 dicht, insb. vakuum-dicht, eingepaßt, z.B. eingeschweißt, -gelötet oder -gewalzt, vgl. zu letzterem die US-A 56 10 342.

Die Meß- und Betriebsschaltung der Erfindung kann auch bei einem Coriolis-Massedurchflußaufnehmer mit einem einzigen Meßrohr, das eine Auslegermasse aufweist, nach der älteren EP-Anmeldung 97 81 0559.1 eingesetzt werden.

Anstatt eines einzigen geraden Meßrohrs kann der Massedurchflußaufnehmer des Massedurchflußmessers auch ein einziges, in einer Ebene verlaufendes, gebogenes Meßrohr, z.B. ein kreissektor-förmiges Meßrohr, aufweisen, wie es z.B. in der älteren EP-Anmeldung 96 10 9242.6 beschrieben ist.

Es sind aber auch mehrere, insb. zwei, gerade Meßrohre, wie in der US-A 47 93 191 beschrieben, oder mehrere, insb. zwei, gebogene Meßrohre, wie in der US-A 41 27 028 beschrieben, möglich.

Ferner kann die Meß- und Betriebsschaltung der Erfindung auch bei einem Massedurchflußaufnehmer mit einem Meßrohr und einem Blindrohr verwendet werden, wie er in der WO-A 95/03528 beschrieben ist.

Schließlich ist die Meß- und Betriebsschaltung der Erfindung auch bei Massedurchflußmessern anwendbar, deren Massedurchflußaufnehmer mindestens ein schraubenförmiges Meßrohr entsprechend der US-A 55 57 973 oder entsprechend der EP-A 763 720 aufweisen.

Die Flansche 2, 3 und die Endplatten 13, 14 sind an oder in einem Trägerrohr 15 befestigt. In Fig. 1 sind die Flansche 2, 3 durch Schrauben, von denen eine Schraube 5 rechts oben im Schnitt vollständig zu sehen ist, am Trägerrohr 15 fixiert. Die Endplatten 13, 14 können mit der Innenwand des Trägerrohrs 15 dicht, insb. vakuum-dicht, verschweißt oder verlötet sein. Es ist jedoch auch möglich, Trägerrohr 15 und Endplatten 13, 14 einstückig auszubilden.

Als Mittel, die das Meßrohr 4 zu Schwingungen, insb. zu Resonanz-Schwingungen, bevorzugt zu Resonanz-Biegeschwingungen, anregen, dient ein in der Mitte zwischen den Flanschen 2, 3 und den Endplatten 13, 14 sowie im Zwischenraum zwischen dem Trägerrohr 15 und dem Meßrohr 4 angeordneter, z.B. elektromagnetischer, Schwingungserreger 16, der einen am Meßrohr 4 befestigten Dauermagneten 161 und eine am Trägerrohr 15 befestigte Spule 162 umfaßt, in die der Dauermagnet 161 eintaucht und in der dieser hin- und herbewegbar ist. Anstatt des Trägerrohrs kann auch ein Tragrahmen verwendet werden.

In Fig. 1 erregt der Schwingungserreger 16 das Meßrohr 4 zu Biegeschwingungen in der Zeichenebene, und in dieser Ebene treten daher auch die die erwähnte Phasenverschiebung bewirkenden Corioliskräfte auf.

Ferner sind im Zwischenraum zwischen dem Meßrohr 4 und dem Trägerrohr 15 ein erster und ein zweiter Schwingungssensor 17, 18 für die Schwingungen des Meßrohrs 4 angeordnet. Der Schwingungssensor 17 bzw. 18 befindet sich zwischen der Endplatte 13 bzw. 14 und dem Schwingungserreger 16, bevorzugt im gleichen Abstand von diesem, also auch von der Mitte des Meßrohrs 4.

Bei unterschiedlichem Abstand der Schwingungssensoren 17, 18 von der Mitte des Meßrohrs 4 oder bei voneinander verschiedener Empfindlichkeit derselben wird bei der Erfindung die dadurch bedingte Unsymmetrie der Sensorsignale über den Verstärkungsfaktor eines nachgeschalteten Verstärkers ausgeglichen, vgl. weiter unten.

Die Schwingungssensoren 17, 18 sind elektromagnetische Schwingungssensoren, die einen am Meßrohr 4 befestigten Dauermagneten 171 bzw. 181 und eine am Trägerrohr 15 befestigte Spule 172 bzw. 182 umfassen, in die der Dauermagnet 171 bzw. 181 eintaucht und in der dieser hin- und herbewegbar ist. Am Schwingungssensor 17 bzw. 18 entsteht ein analoges Signal x17, x18.

An der Endplatte 13 ist ein erster Temperaturfühler 19 befestigt, der ein die momentane Temperatur des Meßrohrs repräsentierendes analoges Signal abgibt. Am Trägerrohr 15 ist ein zweiter Temperaturfühler 20 befestigt, der ein die momentane Temperatur des Trägerrohrs 15 repräsentierendes analoges Signal abgibt. Als Temperaturfühler werden bevorzugt Platinwiderstände benutzt, die, z.B. durch Kleben, an der Endplatte 13 bzw. am Trägerrohr 15 befestigt sind.

In Fig. 1 ist schließlich noch ein am Trägerrohr 15 fixiertes Gehäuse 21 gezeigt, das u.a. dem Schutz von Leitungen dient, die an den Schwingungserreger 16 und an die Schwingungssensoren 17, 18 angeschlossen, jedoch aus Gründen der Übersichtlichkeit nicht dargestellt sind.

Das Gehäuse 21 ist mit einem hals-artigen Übergangsstück 22 versehen, an dem ein nur teilweise gezeichnetes Elektronik-Gehäuse 23 zur Aufnahme der gesamten Meß- und Betriebsschaltung des Massedurchflußmessers fixiert ist.

Für den Fall, daß das Übergangsstück 22 und das Elektronik-Gehäuse 23 das Schwingungsverhalten des Trägerrohrs 15 ungünstig beeinflussen sollten, können diese auch getrennt vom Massedurchflußaufnehmer 1 angeordnet werden. Dann besteht lediglich eine Leitungsverbindung zwischen der Elektronik und dem Massedurchflußaufnehmer 1.

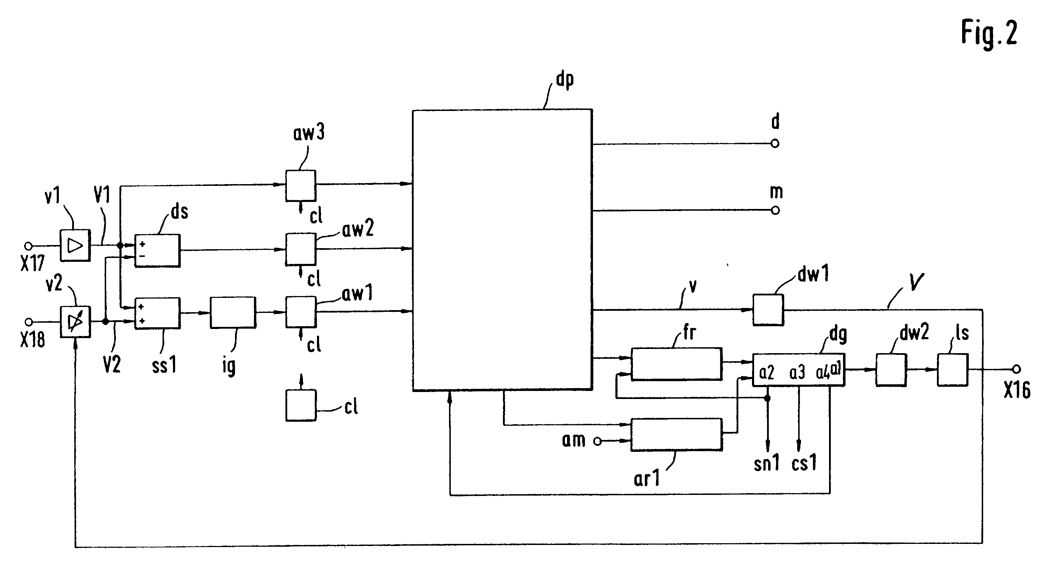

Die Fig. 2 zeigt nach Art eines Blockschaltbilds eine Meß- und Betriebsschaltung für Massedurchflußmesser mit den oben erwähnten verschiedenen Ausgestaltungen von Meßrohren. Die Meß- und Betriebsschaltung umfaßt eine Meß-Teilschaltung und eine Erreger-Teilschaltung. Da in der Meß-Teilschaltung erzeugte Signale von der Erreger-Teilschaltung benötigt werden, wird zunächst die erstere erläutert.

Einem ersten Verstärker v1 mit fest eingestellter Verstärkung ist eingangsseitig eines der beiden Signale der Schwingungssensoren zugeführt, in Fig. 1 ist das das Signal X17 des ersten Schwingungssensors 17. Der erste Verstärker liefert ein Ausgangssignal V1. Das Signal X18 des zweiten Schwingungssensors 18 ist eingangsseitig einem zweiten Verstärker v2 zugeführt, der einen Verstärkungs-Steuer-Eingang hat, so daß dessen Verstärkung variabel ist; in welcher Weise diese Verstärkungssteuerung erfolgt, ist weiter unten erläutert. Der zweite Verstärker liefert ein Ausgangssignal V2.

Den Verstärkern v1, v2 ist eine erste Summierstufe ss1 für das Ausgangssignal des ersten Verstärkers und das des zweiten Verstärkers nachgeschaltet. Das Ausgangssignal der ersten Summierstufe ss1 ist einem Eingang einer Integrierstufe ig zugeführt, deren Ausgangssignal gegenüber dem Ausgangssignal der ersten Summierstufe ss1 eine Phasenverschiebung von 90° hat.

Den Verstärkern v1, v2 ist ferner eine Differenzstufe ds nachgeschaltet, so daß an deren Minuend-Eingang der Ausgang des Verstärkers v1 und an deren Subtrahend-Eingang der Ausgang des Verstärkers v2 liegt.

Die bisher erläuterten Teile der Meß-Teilschaltung verarbeiten analoge Signale und sind daher Analog-Schaltungen.

Auf die Integrierstufe ig folgt ein erster Analog/Digital-Wandler aw1, auf die Differenzstufe ds ein zweiter Analog/Digital-Wandler aw2 und auf den ersten Verstärker v1 ein dritter Analog/Digital-Wandler aw3.

Ein Taktoszillator cl erzeugt ein die drei Analog/Digital-Wandler aw1, aw2, aw3 synchron taktendes Abtastsignal, dessen Frequenz, die Abtastfrequenz, nicht mit der Schwingfrequenz des Meßrohrs oder der Meßrohre verkoppelt zu sein braucht, also insb. kein ganzzahliges Vielfaches oder kein ganzzahliger Teil dieser Schwingfrequenz ist.

Die Abtastfrequenz ist ferner so hoch gegenüber der höchsten auftretenden Schwingfrequenz gewählt, dass keine analogen Anti-Aliasfilter vor den Analog/Digital-Wandlern aw1, aw2, aw3 erforderlich sind; die Erfindung verzichtet somit bewußt auf diese Anti-Aliasfilter.

Ein Digitalprozessor dp hat drei Eingänge, von denen einer dem ersten, einer dem zweiten und einer dem dritten Analog/Digital-Wandler aw1, aw2, aw3, nachgeschaltet ist und der ein digitales Massedurchflußsignal m an einem ersten Ausgang und/oder ein digitales Dichtesignal d an einem zweiten Ausgang abgibt.

Die Digital-Signale m, d können in üblicher Weise in analoge Signale umgeformt werden, wie sie in der Meßtechnik standardisiert sind, also z.B. in einen Gleichstrom, dessen zwischen 4 mA und 20 mA variierende Stromstärke proportional zur gemessenen Masse oder proportional zur gemessenen Dichte ist, oder in ein Impulssignal, dessen Frequenz proportional zur gemessenen Masse oder proportional zur gemessenen Dichte ist.

An einem dritten Ausgang des Digitalprozessors dp wird ein digitales Verstärkungs-Steuersignal v erzeugt. Dieses ist einem ersten Digital/Analog-Wandler dw1 zugeführt und wird dadurch in ein analoges Verstärkungs-Steuersignal V gewandelt. Ein Ausgang des ersten Digital/Analog-Wandlers dw1, an dem das Verstärkungs-Steuersignal V ansteht, ist mit dem Verstärkungs-Steuer-Eingang des zweiten Verstärkers v2 verbunden ist.

Dadurch ist ein Regelkreis gebildet, mit dem die Amplitude des Ausgangssignals des zweiten Verstärkers v2 gleich der Amplitude des Ausgangssignals des ersten Verstärkers v1 gemacht wird.

Die bereits erwähnte Erreger-Teilschaltung umfaßt einen Digital-Generator dg, der einen Frequenz-Steuereingang und einen Amplituden-Steuereingang aufweist. Ferner hat der Digital-Generator dg einen ein digitales Erregersignal abgebenden ersten Ausgang a1, einen ein digitales erstes Sinus-Signal sn1 abgebenden zweiten Ausgang a2, einen ein digitales erstes Cosinus-Signal cs1 abgebenden dritten Ausgang a3.

Ein vierter Ausgang a4 des Digital-Generators dg gibt ein die momentane Schwingfrequenz darstellendes Digital-Signal ab und ist mit einem weiteren Eingang des Digitalprozessors dp verbunden

Ein digitaler Frequenzregler fr hat einen ersten Eingang, einen zweiten Eingang und einen Ausgang. Der erste Eingang ist mit dem zweiten Ausgang a2 des Digital-Generators dg verbunden, so daß dem ersten Eingang das digitale erste Sinus-Signal sn1 zugeführt ist. Mit dem vierten Ausgang des Digitalprozessors dp ist der zweite Eingang des Frequenzreglers fr und dessen Ausgang mit dem Frequenz-Steuereingang des Digital-Generators dg verbunden.

Ein erster digitaler Amplitudenregler ar1 hat einen ersten und einen zweiten Eingang sowie einen Ausgang. Der erste Eingang ist mit dem Ausgang des ersten Bandpasses bp1 verbunden. Dem zweiten Eingang ist ein digitales Amplituden-Einstellsignal am zugeführt, das vom Benutzer des Massedurchflußmessers eingestellt und in Abhängigkeit von den oben erwähnten mechanischen Eigenschaften des Meßrohrs bzw. der Meßrohre gewählt werden kann.

Der Ausgang des ersten digitalen Amplitudenreglers ar1 ist mit dem Amplituden-Steuereingang des Digital-Generators dg verbunden. Somit ist die Amplitude des vom ersten Ausgang a1 des Digital-Generators dg abgegebenen Signals vom Benutzer vorgebbar, bleibt jedoch, nachdem vorgegeben, konstant.

Dem eben erwähnten ersten Ausgang al des Digital-Generators dg ist ein zweiter Digital/Analog-Wandler dw2 nachgeschaltet, der eine analoge Endstufe ls ansteuert. Mit deren Ausgangssignal X16 ist ein Schwingungserreger, z.B. der Schwingungserreger 16 von Fig. 1, gespeist.

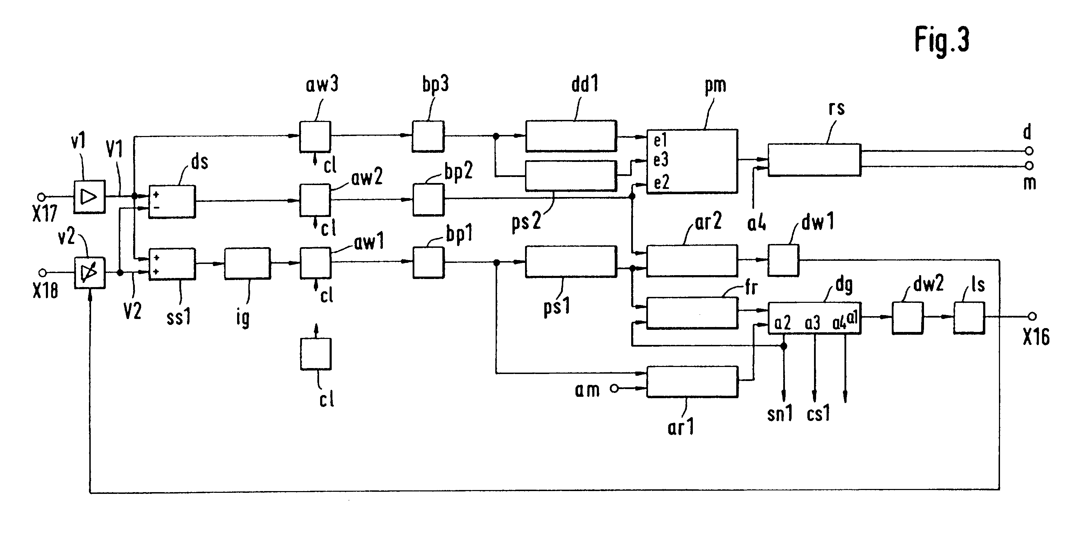

In Fig. 3 ist nach Art eines Blockschaltbilds eine Ausgestaltung des Digitalprozessors dp von Fig. 2 gezeigt. Ein erster digitaler Bandpaß bp1 ist dem ersten Analog/Digital-Wandler aw1, ein zweiter digitaler Bandpaß bp2 ist dem zweiten Analog/Digital-Wandler aw2 und ein dritter digitaler Bandpaß bp3 ist dem Analog/Digital-Wandler aw3 nachgeschaltet.

Die drei Bandpässe bp1, bp2, bp3 sind gleich, haben also untereinander einen identischen Aufbau, und sie haben, eine untere bzw. eine obere Grenzfrequenz, die kleiner als die kleinste bzw. größer als die größte auftretende Frequenz der Schwingungen des Meßrohrs bzw. der Meßrohre ist.

Dieser durch die untere und die obere Grenzfrequenz definierte Durchlaßbereich der Bandpässe ist somit

EP 0 866 319 B1

einerseits vom mechanischen Design der Meßrohre abhängig; insb. bestimmen deren Länge, Durchmesser, Wandstärke und Material, wie z.B. Stahl, Titan oder Zirconium, den Durchlaßbereich. Andererseits wird der Durchlaßbereich auch vom zu messenden Fluid und dessen Dichte bestimmt.

Für eine bestimmte Dimensionierung des Meßrohrs 4 bzw. der Meßrohre in Verbindung mit dem Ensemble der zur Messung mit einem konkreten Coriolis-Massedurchflußmesser zugelassenen Fluide liegt der Durchlaßbereich fest, so daß auch die Werte der unteren und der oberen Grenzfrequenz der drei Bandpässe bp1, bp2, bp3 bekannt sind.

Da die Sensorsignale eine Frequenz haben, die der momentanen Schwingfrequenz des bzw. der Meßrohre gleich ist, enthalten die Ausgangssignale der drei Bandpässe bp1, bp2, bp3 auch ein den Wert der momentanen Schwingfrequenz repräsentierndes Digital-Signal.

Dem dritten Bandpaß bp3 ist ein Signal-Eingang einer ersten digitale Amplitudenmeßstufe dd1 nachgeschaltet, an deren Ausgang ein Digital-Signal auftritt, das solange konstant ist, wie die Amplitude des Ausgangs-Signals des dritten Bandpasses bp3 konstant ist, und das mit dieser Amplitude identisch ist. Die erste digitale Amplitudenmeßstufe dd1 hat somit die Funktion einer digitalen Stufe, deren Ausgangssignal gleich der Amplitude von deren Eingangsignal ist. Unter Amplitude wird hier wie üblich der positive Maximalwert eines periodisch veränderlichen Signals verstanden.

Ein digitaler Phasenmesser pm hat einen ersten, einen zweiten und einen dritten Eingang e1, e2, e3. Der erste Eingang e1 liegt am Ausgang der ersten Amplitudenmeßstufe dd1, der zweite Eingang e2 am Ausgang des zweiten Bandpasses bp2 und der dritte Eingang e3 am Ausgang des dritten Bandpasses bp3.

Ein zweiter digitaler Amplitudenregler ar2 hat einen ersten Eingang, der mit dem Ausgang einer ersten digitalen 90°-Phasenschieber- und Normierstufe ps1 verbunden ist; diese ist dem ersten Bandpaß bp1 nachgeschaltet. Ein zweiter Eingang des zweiten Amplitudenreglers ar2 ist mit dem Ausgang des zweiten Bandpasses bp2 verbunden. Am Ausgang des zweiten digitalen Amplitudenreglers ar2 tritt das oben erwähnte digitale Verstärkungs-Steuersignal v auf.

Eine Rechenstufe rs dient der Berechnung der Masse M und/oder der Dichte D des im Meßrohr strömenden Fluids und hat einen ersten Eingang, der am Ausgang des Phasenmessers pm liegt. Das oben erwähnte digitale Massedurchflußsignal m ist an einem ersten Ausgang der Rechenstufe rs abnehmbar und das erwähnte digitale Dichtesignal d an einem zweiten Ausgang.

Die Fig. 4 zeigt nach Art eines Blockschaltbilds eine Weiterbildung der Meß- und Betriebsschaltung für einen Massedurchflußaufnehmer, der den ersten Temperaturfühler 19 zur Messung der Meßrohr-Temperatur und den zweiten Temperaturfühler 20 zur Messung der Trägerrohr-Temperatur enthält. Ferner sind ein erster und ein zweiter temperaturunabhängiger Vergleichswiderstand 29, 30 vorgesehen. Ein erster Eingangs/Ausgangs-Pfad einer zweiten Summierstufe ss2 ist zwischen dem ersten Verstärker v1 und dem dritten Analog/Digital-Wandler aw3 eingefügt.

Einem Generator sg für ein analoges Sinussignal, dessen Frequenz außerhalb des Schwingfrequenz-Bereichs des Meßrohrs bzw. der Meßrohre liegt, ist ein Widerstand R nachgeschaltet. Somit ist das analoge Sinussignal nur am generator-abgewandten Anschluß des Widerstands R abnehmbar.

Ein Multiplexer mx ist von einem Taktgenerator cm gesteuert und schaltet zyklisch den ersten und den zweiten Temperaturfühler 19, 20 sowie den ersten und den zweiten Vergleichswiderstand 29, 30 zu einem zweiten Eingang der zweiten Summierstufe ss2 unter Bildung eines jeweiligen Spannungsteilers mit dem Widerstand R durch.

Somit werden also nacheinander und temporär die Temperaturfühler 19, 20 und die Vergleichswiderstände 29, 30 mit dem Widerstand R zu einem Spannungteiler R-19, R-20, R-29, R-30 zusammengeschaltet. Der Verbindungspunkt mit dem Widerstand R ist der Abgriff des Spannungsteilers, der vom Multiplexer mx zum zweiten Eingang der zweiten Summierstufe ss2 durchgeschaltet wird.

Dem zweiten Eingang der zweiten Summierstufe ss2 werden somit zyklisch vier analoge Sinussignale zugeführt, von denen eines eine von der Temperatur des Meßrohrs abhängige Amplitude, eines eine von der Temperatur des Trägerrohrs abhängige Amplitude, eines eine temperatur-unabhängige und nur von den Werten der Widerstände R, 29 abhängige Amplitude und eines eine temperatur-unabhängige und nur von den Werten der Widerstände R, 30 abhängige Amplitude hat.

Dem Ausgang des dritten Analog/Digital-Wandlers aw3 ist ein schmalbandiger vierter Bandpaß bp4 nachgeschaltet, dessen Durchlaßbereich die Frequenz des analogen Sinussignals umfaßt.

Mittels der zweiten Summierstufe ss2 werden diese analogen Sinussignale zwar dem verstärkten Sensorsignal X17 überlagert, dieses Signal wird aber mittels des vierten Bandpasses bp4 unterdrückt, so daß an dessen Ausgang nur die vier analogen Sinussignale repräsentierende Digital-Signale auftreten.

In vergleichbarer Weise werden die vier analogen Sinussignale durch den dritten Bandpaß bp3 unterdrückt, so daß an dessen Ausgang nur ein das verstärkte Sensorsignal X17 repräsentierendes Digital-Signal auftritt.

Dem vierten Bandpaß bp4 ist ein Signal-Eingang einer zweiten digitalen Amplitudenmeßstufe dd2 nachgeschaltet, an deren Ausgang ein Digital-Signal auftritt, das solange konstant ist, wie die Amplitude des Ausgangs-Signals des vierten Bandpasses bp4 konstant ist, und das mit dieser Amplitude identisch ist.

Die zweite Amplitudenmeßstufe dd2 erzeugt somit zyklisch vier Digital-Signale, die die digitalisierten Amplituden der oben erläuterten vier analogen Sinussignale repräsentieren.

Ein Ausgang der zweiten Amplitudenmeßstufe dd2 ist mit einem Signal-Eingang einer Temperatursignal-Trennstufe tt verbunden, von der ein Steuer-Eingang am Ausgang des Taktgenerators cm liegt.

An einem ersten Ausgang der Temperatursignal-Trennstufe tt tritt ein der vom ersten Temperaturfühler 19 gemessenen Temperatur entsprechendes Digital-Signal auf und ist mit einem dritten Eingang der Rechenstufe rs verbunden.

An einem zweiten Ausgang der Temperatursignal-Trennstufe tt tritt ein der vom zweiten Temperaturfühler 20 gemessenen Temperatur entsprechendes Digital-Signal auf und ist mit einem vierten Eingang der Rechenstufe rs verbunden.

Am ersten Ausgang der Rechenstufe rs ist ein temperatur-kompensiertes digitales Massedurchflußsignal m' und an deren zweitem Ausgang ein temperatur-kompensiertes digitales Dichtesignal d' abnehmbar.

In der Schaltung von Fig. 4 erzeugt der Digital-Generator dg zusätzlich zum ersten Sinus-Signal sn1 und zusätzlich zum ersten Cosinus-Signal cn1 an einem fünften Ausgang a5 ein zweites digitales Sinus-Signal sn2 und an einem sechsten Ausgang a6 ein zweites digitales Cosinus-Signal cn2. Die Frequenz dieser beiden Signale sn2, cn2 ist gleich der Frequenz des vom Sinusgenerator sg erzeugten analogen Sinussignals.

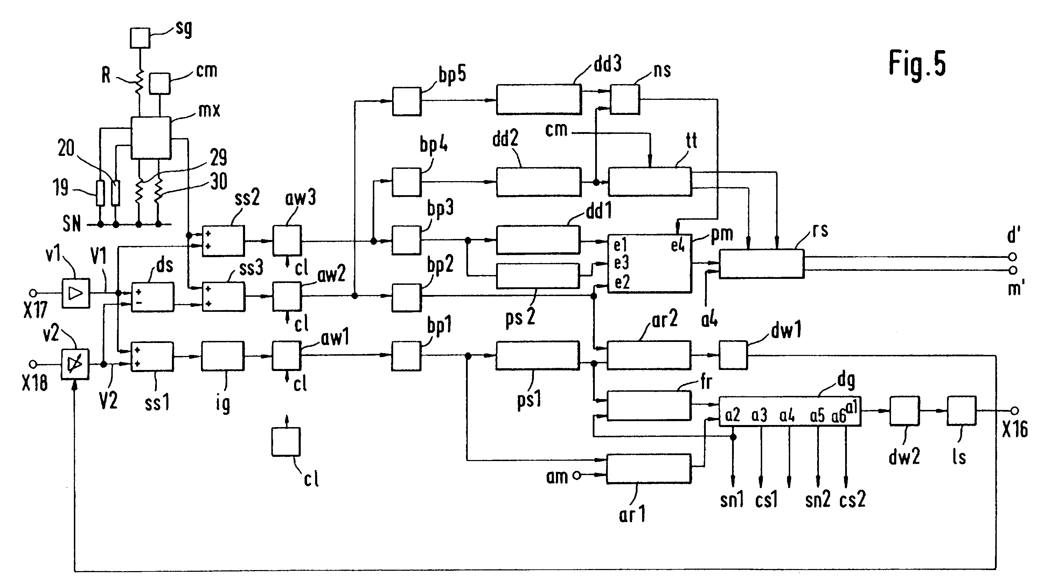

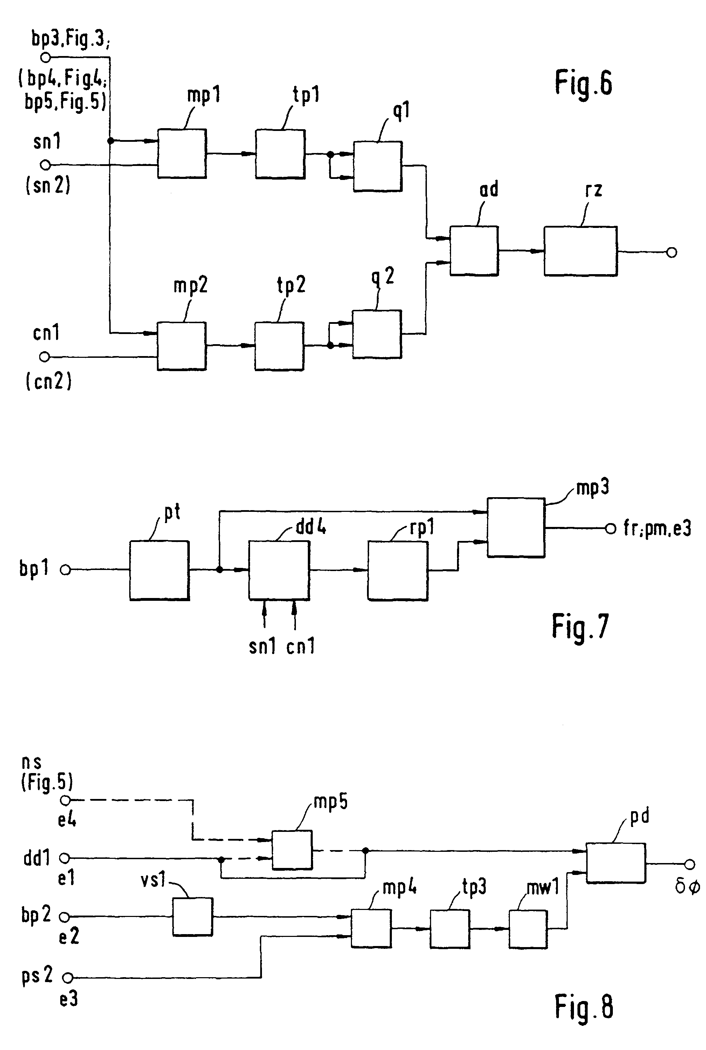

Die Fig. 5 zeigt nach Art eines Blockschaltbilds eine Weiterbildung der Meß- und Betriebsschaltung nach Fig. 4. Ein erster Eingangs/Ausgangs-Pfad einer dritten Summierstufe ss3 ist zwischen der Differenzstufe ds und dem zweiten Analog/Digital-Wandler aw2 eingefügt. Ein zweiter Eingang der dritten Summierstufe ss3 liegt am Ausgang des Multiplexers mx.

Ein dem Ausgang des zweiten Analog/Digital-Wandlers aw2 nachgeschalteter fünfter Bandpaß bp5 hat denselben Aufbau wie der vierte Bandpaß bp4. Am Ausgang des fünften Bandpasses bp5 treten wieder nur vier die vier analogen Sinussignale von Fig. 3 repräsentierende Digital-Signale auf.

Dem fünften Bandpaß bp5 ist eine dritte digitale Amplitudenmeßstufe dd3 nachgeschaltet, die dieselbe Funktion wie die zweite Amplitudenmeßstufe dd2 nach Fig. 4 aufweist.

Am Ausgang der dritten Amplitudenmeßstufe dd3 liegt ein erster Eingang einer Unsymmetrie-Meßstufe ns und an deren zweitem Eingang der Ausgang der zweiten Amplitudenmeßstufe dd3. Ein Ausgang der Unsymmetrie-Meßstufe ns ist mit einem weiteren Signal-Eingang des Phasenmessers pm verbunden.

Mittels der Unsymmetrie-Meßstufe ns und der ihr signalflußmäßig vorgeschalteten Stufen werden Unsymmetrien ermittelt und im Phasenmesser pm kompensierend verarbeitet, die in den Analog/Digital-Wandlern aw2, aw3 und den ihnen vorgeschalteten analogen Stufen auftreten können.

In Fig. 6 ist blockschaltbild-artig der bevorzugte Aufbau der bei der Erfindung verwendeten Amplituden-Meßstufen dargestellt. Einem ersten Eingang eines ersten Multiplizierer mp1 und einem ersten Eingang eines zweiten Multiplizierer mp2 ist das Signal zugeführt, dessen Amplitude zu messen ist. Das ist bei der ersten Amplituden-Meßstufe dd1 der Fig. 3 bis 5 das Ausgangssignal des dritten Bandpasses bp3, bei der zweiten Amplituden-Meßstufe dd2 der Fig. 4 und 5 das Ausgangssignal des vierten Bandpasses bp4 und bei der dritten Amplituden-Meßstufe dd3 der Fig. 5 das Ausgangssignal des fünften Bandpasses bp5.

In der ersten Amplitudenmeßstufe dd1 ist einem zweiten Eingang des ersten Multiplizierers mp1 das vom Digital-Generator dg der Fig. 2 bis 5 erzeugte erste digitale Sinus-Signal sn1 und einem zweiten Eingang des zweiten Multiplizierers mp2 das vom Digital-Generator dg erzeugte erste digitale Cosinus-Signal cn1 zugeführt.

In der zweiten und in der dritten Amplitudenmeßstufe dd2, dd3 ist dagegen dem zweiten Eingang des ersten Multiplizierers mp1 das vom Digital-Generator dg der Fig. 4 und 5 erzeugte zweite digitale Sinus-Signal sn2 und dem zweiten Eingang des zweiten Multiplizierers mp2 das vom Digital-Generator dg erzeugte zweite digitale Cosinus-Signal cn2 zugeführt.

Dem ersten Multiplizierer mp1 ist ein erster digitaler Tiefpaß tp1 und dem zweiten Multiplizierer mp2 ist ein zweiter digitaler Tiefpaß tp2 nachgeschaltet. Die obere Grenzfrequenz der beiden Tiefpässe tp1, tp2 liegt weit unterhalb der kleinsten zu erwartenden Schwingfrequenz des Meßrohrs 4 bzw. der Meßrohre.

Auf den ersten Tiefpaß tp1 folgt ein erster Quadrierer q1 und auf den zweiten Tiefpaß tp2 ein zweiter Quadrierer q2. Das Ausgangssignal des ersten Quadrieres q1 und das Ausgangssignal des zweiten Quadrierers q2 werden mittels einer Addierers ad summiert.

Das Ausgangssignal des Addierers ad ist einem Radizierer rz zugeführt, der daraus als sein Ausgangssignal ein Digital-signal bildet, das der doppelten Quadratwurzel aus dem Ausgangssignal des Addierers ad gleich ist und das in digitaler Form die Amplitude der Ausgangssignale der oben erwähnten Bandpässe darstellt.

In Fig. 7 ist blockschaltbild-artig der bevorzugte Aufbau der bei der Erfindung verwendeten 90°-Phasenschieber- und Normierstufen ps1, ps2 dargestellt. Deren Eingang, dem das Ausgangssignal des ersten Bandpasses bp1 bzw. bp2 der Fig. 3 bis 5 zugeführt ist, ist auch der Eingang eines reinen 90°-Phasenschieberteils pt. Auf diese Stufe folgt ein vierter Amplitudenmesser dd4, dem das erste Sinus-Signal sn1 und das erste Cosinus-Signal cn1 zugeführt sind.

Das Ausgangssignal des vierten Amplitudenmessers dd4 ist einem ersten digitalen Reziprozierer rp1 zugeführt, der aus seinem Eingangssignal den zugehörigen Reziprokwert bildet. Das Ausgangssignal des 90°-Phasenschieberteils pt ist dem ersten Eingang eines dritten Multiplizierers mp3 und das Ausgangssignal des ersten Reziprozierers rp1 dem zweiten Eingang des dritten Multiplizierers mp3 zugeführt.

Am Ausgang des dritten Multiplizierers mp3 tritt dasjenige Digital-Signal auf, das in den Fig. 2 bis 5 dem zweiten Eingang des Frequenzreglers fr und in den in den Fig. 3 bis 5 dem ersten Eingang des zweiten Amplitudenreglers ar2 bzw. dem dritten Eingang e3 des Phasenmessers pm zugeführt ist.

Durch die mittels des ersten Reziprozierers bewirkte Normierung hat das Ausgangssignal der 90°-Phasenschieber- und Normierstufen ps1, ps2 eine Amplitude, die den Wert eins repräsentiert.

In Fig. 8 ist blockschaltbild-artig der bevorzugte Aufbau des bei der Erfindung verwendeten Phasenmessers pm dargestellt, der die schon oben erwähnten drei Eingänge e1, e2, e3 hat. Der erste Eingang e1 ist mit dem Ausgang der ersten Amplitudenmeßstufe dd1, der zweite Eingang e2 mit dem Ausgang des zweiten Bandpasses bp2 und der dritte Eingang e3 mit Ausgang der zweiten 90°-Phasenschieber- und Normierstufe ps2 verbunden.

Der zweite Eingang e2 liegt am Eingang einer ersten Verzögerungsstufe vs1, deren Verzögerungzeit gleich der Verzögerungzeit der zweiten 90°-Phasenschieber- und Normierstufe ps2 ist. Auf die erste Verzögerungsstufe vs1 folgt ein erster Eingang eines vierten Multiplizierers mp4, von dem ein zweiter Eingang mit dem dritten Eingang e3 verbunden ist.

Auf den vierten Multiplizierer mp4 folgt ein dritter Tiefpaß tp3, dessen obere Grenzfrequenz weit unterhalb der kleinsten zu erwartenden Schwingfrequenz des Meßrohrs 4 bzw. der Meßrohre liegt und auf den ein erster Mittelwertbildner mw1 folgt. Ein erster Eingang einer Phasendifferenzstufe pd ist mit dem ersten Eingang e1 verbunden, von der ein zweiter Eingang am Ausgang des ersten Mittelwertbildners mw1 liegt.

In Fig. 8 ist gestrichelt noch eine Ergänzung eingezeichnet, die für die Schaltung von Fig. 5 gilt. In die Verbindung des ersten Eingangs e1 mit dem ersten Eingang der Phasendifferenzstufe pd ist ein fünfter Multiplizierers mp5 eingefügt, von dem ein erster Eingang am ersten Eingang e1 und ein zweiter Eingang am vierten Eingang e4 liegt. Dieser ist, wie oben erwähnt, mit dem Ausgang der Unsymmetrie-Meßstufe ns verbunden.

Mittels der Phasendifferenzstufe pd wird ein Digital-Signal erzeugt, das der eingangs erwähnten Phasendifferenz $\delta\phi$ der Signale X18, X19 der beiden Schwingungssensoren 18, 19 exakt proportional ist. Dies geschieht, wie es in der folgenden Herleitung erläutert ist; darin sind für analoge Signale große Buchstaben und für Digital-Signale kleine Buchstaben gewählt.

Die Ausgangssignale V1, V2 der beiden Verstärker v1, v2 sind nicht nur reine sinusförmige Signale, sondern sie enthalten auch Störsignale und Gleichspannungsanteile etc. In ganz allgemeiner Form, bezogen auf die Mitte des Meßrohrs 4 bzw. der Meßrohre, gilt für sie:

$$V1 = U_{17os} + U_{17}\sin(\Omega t - \phi/2) + \sum_{n=1}^{n=N} U_{17n}\sin(\Omega_n t + \alpha_n) \qquad (1)$$

$$V2 = U_{18os} + U_{18}\sin(\Omega t + \phi/2) + \sum_{n=1}^{n=N} U_{18n}\sin(\Omega_n t + \beta_n) \qquad (2)$$

In den Gleichungen (1), (2) bedeuten:

| | |
|---|---|
| $\Omega$: | Kreisfrequenz der Sensorsignale; es gilt: $\Omega = 2\pi f$. |
| f: | Frequenz der Sensorsignale X17, X18. |
| t: | die Zeitvariable. |
| $U_{17os}$, $U_{18os}$: | Gleichspannungs-Offsets der Sensorsignale X17, X18 und/oder der Verstärker v1, v2. |
| $U_{17}$, $U_{18}$: | Amplituden des Wechselanteils von V1 bzw. V2. |
| $\phi$: | Phasenverschiebung der Sensorsignale gegenüber der Schwingung in der Mitte des Meßrohrs. |
| N: | Anzahl möglicher Störfrequenzen. |
| n: | Nummer einer Störfrequenz aus der Anzahl N. |
| $\alpha$, $\beta$: | Phasenverschiebung der n-ten Störfrequenz. |
| $U_{17n}$, $U_{18n}$: | Amplitude der n-ten Störfrequenz. |

Hinter dem Bandpaß bp2 ergibt sich das Digital-Signal u:

$$u \sim U_{17} - U_{18} = \{(U_{17} - U_{18})\cos(\phi/2)\}\sin\Omega t$$

$$\pm \{(U_{17} + U_{18})\sin(\phi/2)\}\cos\Omega t \tag{3}$$

Das Signal u enthält keine Offsetanteile mehr und auch keine Anteile mit Vielfachen der Frequenz f.

Da wie erläutert die Sensorsignale mittels des zweiten Amplitudenreglers ar2 auf Amplitudengleichheit geregelt werden, wird der in Gleichung (3) enthaltene Term $(U_{17} - U_{18})\cos(\phi/2)$ zu null. Aus demselben Grund vereinfacht sich der in Gleichung (3) enthaltene Term $(U_{17} + U_{18})\sin(\phi/2)$ zu: $2U_{17}\sin(\phi/2)$. Aus Gleichung (3) wird somit:

$$u \sim \pm 2\{U_{17}\sin(\phi/2)\}\cos\Omega t \tag{4}$$

In ähnlicher Weise läßt sich herleiten, daß der Ausgang der zweiten 90°-Phasenschieber- und Normierstufe ps2 ein Digital-Signal w liefert:

$$w \sim -\cos(\Omega t - \phi/2) \tag{5}$$

Die Signale u und w werden mittels des vierten Multiplizierers mp4 miteinander multipliziert, was auch als Mischung bezeichnet werden kann, da die Signale u, w Sinus-bzw. Cosinus-Signale zum Argument $\Omega t$ sind.

Das Ausgangssignal des dritten Tiefpasses tp3 enthält keine $\sin\Omega t$- bzw. $\cos\Omega t$-Anteile mehr, so daß hinter dem ersten Mittelwertbildner mp1 am einen Eingang des Phasenmessers pm ein Digital-Signal z auftritt, das von $\phi$ abhängig ist:

$$z \sim = U_{17}\sin\phi \tag{6}$$

Dem ersten Eingang e1 des Phasenmessers pm wird vom Ausgang der ersten Amplitudenmeßstufe dd1 ein die Amplitude $U_{17}$ repräsentierendes Signal zugeführt. Der Phasenmesser pm dividiert zunächst z durch $U_{17}$. Dann wird aus dem nur noch zu $\sin\phi$ proportionalen Signal durch Bildung der Arcus-Sinus-Funktion $\phi$ ermittelt. Im Hinblick auf die geforderte hohe Genauigkeit wird bewußt auf eine an sich bei sehr kleinen Werten von $\phi$ mögliche Gleichsetzung von $\phi$ mit $\sin\phi$ verzichtet.

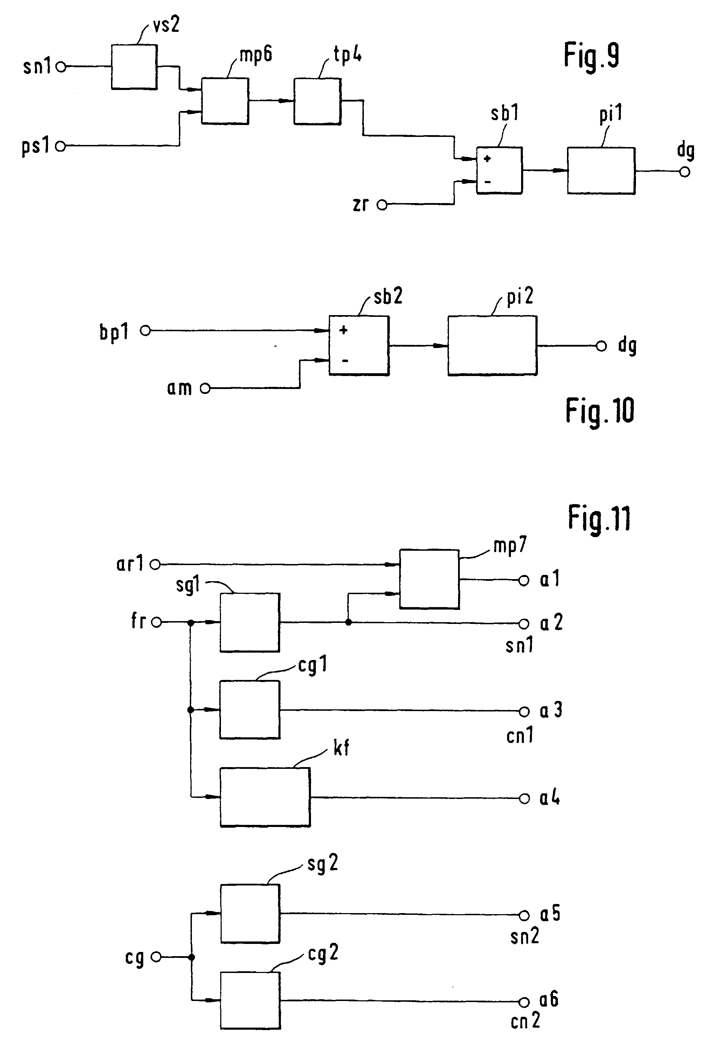

In Fig. 9 ist blockschaltbild-artig der bevorzugte Aufbau des bei der Erfindung verwendeten Frequenzreglers fr dargestellt. Das erste Sinus-Signal sn1 ist einer zweiten Verzögerungsstufe vs2 zugeführt, deren Verzögerungszeit gleich der Verzögerungszeit der ersten 90°-Phasenschieber- und Normierstufe ps1 ist.

Der Ausgang der zweiten Verzögerungsstufe vs2 liegt am ersten Eingang eines sechsten Multiplizierers mp6, dessen zweiter Eingang mit dem Ausgang der 90°-Phasenschieber- und Normierstufe ps verbunden ist.

Am Ausgang des sechsten Multiplizierers mp6 liegt ein vierter Tiefpaß tp4, dessen obere Grenzfrequenz weit unterhalb der kleinsten zu erwartenden Schwingfrequenz des Meßrohrs 4 bzw. der Meßrohre liegt. Ein Minuend-Eingang eines ersten Subtrahierers sb1 ist mit Ausgang des vierten Tiefpasses tp4 verbunden.

Einem Subtrahend-Eingang des ersten Subtrahierers sb1 ist ein Digital-Signal zr zugeführt, das den Sollwert null der Phasenverschiebung zwischen dem Ausgangssignal der ersten 90°-Phasenschieber- und Normierstufe ps1 und dem Signal am zweiten Ausgang des Digitalgenerators dg repräsentiert.

Der Ausgang des ersten Subtrahierers sb1 liegt am Eingang eines ersten PID-Reglers pi1, dessen Ausgang mit dem Frequenz-Steuereingang des Digitalgenerators dg verbunden ist.

In Fig. 10 ist blockschaltbild-artig der bevorzugte Aufbau des bei der Erfindung verwendeten ersten Amplitudenreglers ar1 dargestellt. Am Ausgang des ersten Bandpasses bp1 liegt der Minuend-Eingang eines zweiten Subtrahierers sb2 und an dessen Subtrahend-Eingang das Amplituden-Einstellsignal am.

Der Ausgang des zweiten Subtrahierers sb2 ist mit dem Eingang eines zweiten PID-Reglers pi2 verbunden, dessen Ausgang mit dem Amplituden-Steuereingang des Digital-Generators dg verbunden ist.

In Fig. 11 ist blockschaltbild-artig der bevorzugte Aufbau des bei der Erfindung verwendeten Digital-Generators dg dargestellt. Dessen mit dem Ausgang des ersten Amplitudenreglers ar1 verbundener Amplituden-Steuereingang liegt an einem ersten Eingang eines siebten Multiplizierers mp7, dessen Ausgang der erste Ausgang des Digital-Generators dg ist; hier tritt das den zweiten Digital/Analog-Wandler dw2 ansteuernde Digital-Signal auf.

Das Sinus-Signal sn1 ist auch einem zweiten Eingang des siebten Multiplizierers mp7 zugeführt, durch den das digitale Amplitudensignal des ersten Amplitudenreglers ar1 mit dem mit fester Amplitude erzeugten Sinus-Signal sn1 multipliziert wird.

Ein Frequenz-Steuereingang eines ersten digitalen Sinusgenerators sg1 ist zusammen mit einem Frequenz-Steuereingang eines ersten digitalen Cosinusgenerators cg1 der oben erwähnte Frequenz-Steuereingang des Digital-Generators dg, der am Ausgang des Frequenzreglers fr liegt.

Das Digital-Signal an diesem Ausgang ist eine der momentanen Schwing-Kreisfrequenz des Meßrohrs 4 bzw. der Meßrohre genau proportionale, die Information über die Frequenz enthaltende Zahl, aus der der erste Sinusgenerator sg1 das ebenfalls oben erwähnte erste Sinus-Signal sn1 und der erste Cosinusgenerator cg1 das oben erwähnte erste Cosinus-Signal cn1 erzeugen. Die beiden Signale sn1, cn1 haben somit immer eine Frequenz, die exakt gleich der momentanen Schwingfrequenz des Meßrohrs 4 bzw. der Meßrohre ist. Das Sinus-Signal sn1 liegt am zweiten Ausgang a2 und das Cosinus-Signal cn1 am dritten Ausgang a3.

In Fig. 11 liegt der Frequenz-Steuereingang ferner am Eingang einer Stufe kf, die aus dem oben erwähnten Schwing-Kreisfrequenz-Signal ein Digital-Signal erzeugt, das nur noch die Information über die zur Kreisfrequenz gehörende Frequenz enthält.

Schließlich ist in Fig. 11 einem Frequenz-Steuereingang eines zweiten digitalen Sinusgenerators sg2 zusammen mit einem Frequenz-Steuereingang eines zweiten digitalen Cosinusgenerators cg2 ein vom Benutzer auf die Frequenz des oben erläuterten analogen Sinusgenerator sg einstellbares Digital-Signal cg zugeführt. Die beiden Generatoren sn2, cn2 können z.B. als in Read-Only Memories gespeicherte Sinus- bzw. Cosinus-Tabellen realisiert werden.

Aus dem Digital-Signal cg erzeugt der zweite Sinusgenerator sg2 ein zweites digitales Sinus-Signal sn2 und der zweite Cosinusgenerator cg2 ein zweites digtales Cosinus-Signal cn2. Die beiden Signale sn2, cn2 haben somit immer eine Frequenz, die gleich der Frequenz des analogen Sinusgenerators sg ist. Das Sinus-Signal sn2 liegt am fünften Ausgang a5 und das Signal cn2 am sechsten Ausgang a6.

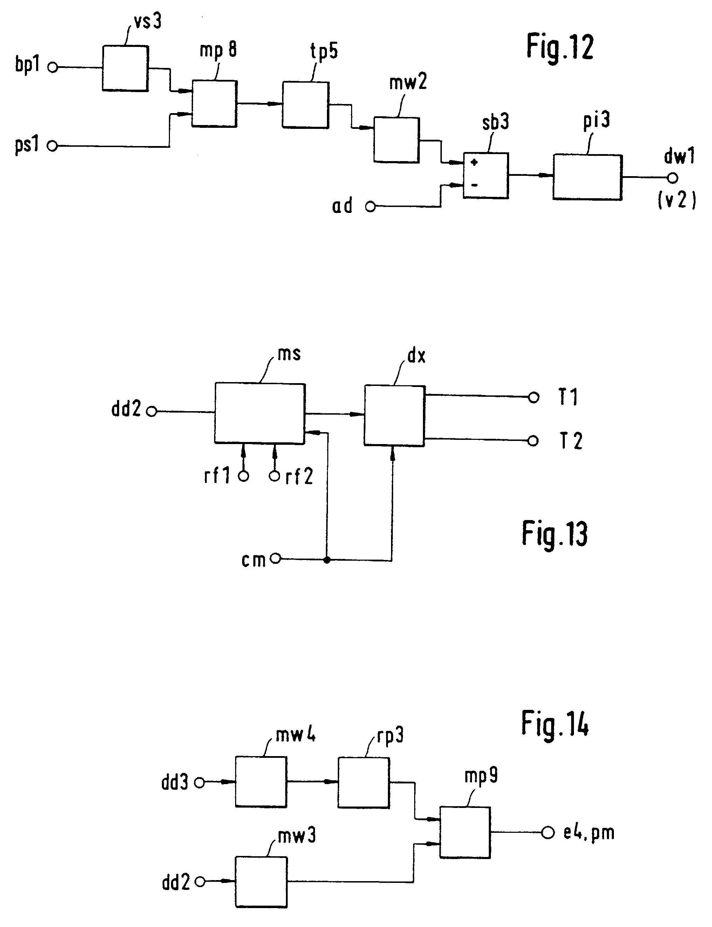

In Fig. 12 ist blockschaltbild-artig der bevorzugte Aufbau des bei der Erfindung verwendeten zweiten Amplitudenreglers ar2 dargestellt. Der Ausgang des ersten Bandpasses bp1 ist mit einem Eingang einer dritten Verzögerungsstufe vs3 verbunden, deren Verzögerungszeit gleich der Verzögerungszeit der ersten 90°-Phasenschieber- und Normierstufe ps1 ist.

An deren Ausgang liegt ein erster Eingang eines achten Multiplizierers mp8 und dessen zweiter Eingang am Ausgang der zweiten Verzögerungsstufe vs2. Auf den achten Multiplizierer mp8 folgt ein fünfter Tiefpaß tp5, dessen obere Grenzfrequenz weit unterhalb der kleinsten zu erwartenden Schwingfrequenz des Meßrohrs 4 bzw. der Meßrohre liegt.

Auf den fünften Tiefpaß tp5 folgt ein zweiter Mittelwertbildner mw2, an dessen Ausgang ein Minuend-Eingang eines dritten Subtrahierers sb3 angeschlossen ist. Dessen Subtrahend-Eingang ist ein Digital-Signal ad zugeführt, das den Sollwert null der Differenz der beiden Sensorsignale X17, X18 repräsentiert.

Auf den dritten Subtrahierer sb3 folgt ein dritter PID-Regler pi3, an dessen Ausgang das den ersten Digital/Analog-Wandler dwl ansteuernde Signal auftritt.

In Fig. 13 ist nach Art eines Blockschaltbilds ein bevorzugter Aufbau der bei der Erfindung verwendeten Temperatursignal-Trennstufe tt gezeigt. Einer Arithmetikstufe ms werden ein Digital-Signal rf1 und ein Digital-Signal rf2, zugeführt, die die konkret realisierten Spannungsteiler-Verhältnisse R-29 bzw. R-30 repräsentieren.

Ferner werden der Arithmetikstufe ms als Eingangssignal das Ausgangssignal der zweiten Amplitudenmeßstufe dd2 und als Steuersignal das Signal des Taktgenerators cm zugeführt. Wenn im Eingangssignal die die Spannungen an den Abgriffen der Spannungsteiler R-29, R-30 repräsentierenden Signale auftreten, wird, gestützt auf die Signale rf1, rf2, in einem zugehörigen RAM ein Spannungs-Widerstands-Polynom abgelegt.

Erscheinen dann im Eingangssignal diejenigen, die Spannungen an den Abgriffen der Spannungsteiler R-19, R-20 repräsentierenden Signale, die die Information über die Temperaturen enthalten, so werden die zu diesen (Spannungs)Signalen gehörenden Widerstandssignale anhand des Spannungs-Widerstands-Polynoms durch Vergleich ermittelt. Diese Widerstandssignale sind die Temperaturen repräsentierende Signale T1, T2.

Ein vom Taktgenerator cm gesteuerter Demultiplexer dx sorgt für die Zuordnung der Signale T1, T2 zu getrennten Leitungen.

Fig. 14 zeigt nach Art eines Blockschaltbilds einen bevorzugten Aufbau der bei der Erfindung verwendeten Unsymmetrie-Meßstufe ns. Wie oben schon erwähnt wurde, sind dem ersten Eingang dieser Stufe das Ausgangsignal der zweiten Amplitudenmeßstufe dd2 und dem zweiten Eingang das Ausgangssignal der dritten Amplitudenmeßstufe dd3 zugeführt.

Ein erster Eingang der Unsymmetrie-Meßstufe ns ist zugleich der Eingang eines dritten Mittelwertbildners mw3. Ein zweiter Eingang der Unsymmetrie-Meßstufe ns ist zugleich der Eingang eines vierten Mittelwertbildners mw4, dessen Ausgang am Eingang eines zweiten Reziprozierers rp2 liegt. Das Ausgangssignal des dritten Mittelwertbildners mw3 ist einem ersten Eingang eines neunten Multiplizierers mp9 zugeführt, dessen zweiter Eingang mit dem Ausgang des zweiten Reziprozierers rp2 verbunden ist.

Der Ausgang des neunten Multiplizierers mp9 ist der Ausgang der Unsymmetrie-Meßstufe ns und mit dem oben erwähnten vierten Eingang des Phasenmessers pm verbunden. Das Ausgangssignal des neunten Multiplizierers mp9 hat einen den Wert eins repräsentierenden Digitalwert, wenn keine Unsymmetrie vorliegt.

**Patentansprüche**

1. Meß- und Betriebsschaltung eines Coriolis-Massedurchflußmessers mit einem Massedurchflußaufnehmer (1), der mindestens ein von einem zu messenden Fluid durchströmtes Meßrohr (4) aufweist,

   - das im Betrieb mit einer von seinem Material und seinen Abmessungen vorgegebenen, jedoch von der Dichte des Fluids variierten Schwingungsfrequenz schwingt, die gleich der momentanen mechanischen Resonanzfrequenz des Meßrohrs oder dieser benachbart ist,
   - an dem ein erster und ein zweiter elektromagnetischer Schwingungssensor (17, 18), in Strömungsrichtung beabstandet voneinander, sowie ein Schwingungserreger (16) angeordnet sind und
   - das von einem Tragrahmen oder einem Trägerrohr (15) umgeben ist,

   mit einer Meß-Teilschaltung, die umfaßt:

   - einen ersten Verstärker (v1) mit fest eingestellter Verstärkung für das Signal (X17) des ersten Schwingungssensors,
   - einen zweiten Verstärker (v2) für das Signal des zweiten Schwingungssensors (X18) mit einem Verstärkungs-Steuereingang,
   - eine erste Summierstufe (ss1) für die Ausgangssignale der beiden Verstärker,
   - eine der ersten Summierstufe nachgeschaltete Integrierstufe (ig), deren Ausgangssignal gegenüber dem Ausgangssignal der ersten Summierstufe eine Phasenverschiebung von 90° hat,
   - eine Differenzstufe (ds) für die Ausgangssignale der beiden Verstärker,
   - einen der Integrierstufe nachgeschalteten ersten Analog/ Digital-Wandler (aw1),
   - einen der Differenzstufe nachgeschalteten zweiten Analog/ Digital-Wandler (aw2),
   - einen dem ersten Verstärker nachgeschalteten dritten Analog/Digital-Wandler (aw3),
   - einen Taktoszillator (c1) zur Abgabe eines die drei Analog/ Digital-Wandler synchron taktenden Abtastsignals,
   - einen Digitalprozessor (dp), der dem ersten, dem zweiten und dem dritten Analog/Digital-Wandler nachgeschaltet ist und der ein digitales Massedurchflußsignal (m) an einem ersten Ausgang und/oder ein digitales Dichtesignal (d) an einem zweiten Ausgang sowie ein Verstärkungs-Steuersignal (v) an einem dritten Ausgang erzeugt,

     -- das einem ersten Digital/Analog-Wandler (dw1) zugeführt ist, dessen Ausgang mit dem Verstärkungs-Steuereingang des zweiten Verstärkers verbunden ist, und

   mit einer Erreger-Teilschaltung, die umfaßt:

   - einen Digital-Generator (dg)

     -- mit einem Frequenz-Steuereingang,
     -- mit einem Amplituden-Steuereingang,
     -- mit einem ein digitales Erregersignal abgebenden ersten Ausgang (a1),
     -- mit einem ein digitales erstes Sinus-Signal (sn1) abgebenden zweiten Ausgang (a2),
     -- mit einem ein digitales erstes Cosinus-Signal (cn1) abgebenden dritten Ausgang (a3) und
     -- mit einem ein die momentane Schwingfrequenz darstellendes Digitalsignal abgebenden vierten Ausgang (a4), der mit einem Eingang des Digitalprozessors verbunden ist,

   - einen digitalen Frequenzregler (fr)

     -- mit einem ersten Eingang, der mit dem zweiten Ausgang des Digital-Generators verbunden ist,
     -- mit einem zweiten Eingang, der mit einem vierten Ausgang des Digitalprozessors verbunden ist, und
     -- mit einem Ausgang, der mit dem Frequenz-Steuereingang des Digital-Generators verbunden ist,

   - einen ersten digitalen Amplitudenregler (ar1)

-- mit einem ersten Eingang, der mit einem fünften Ausgang des Digitalprozessors verbunden ist,
-- mit einem zweiten Eingang, dem ein digitales Amplituden-Einstellsignal (am) zugeführt ist, und
-- mit einem Ausgang, der mit dem Amplituden-Steuereingang des Digital-Generators verbunden ist,

- sowie einen zweiten Digital/Analog-Wandler (dw2),

-- der dem ersten Ausgang des Digital-Generators nachgeschaltet ist und
-- der eine analoge Endstufe (ls) ansteuert, die den Schwingungserreger speist.

2. Meß- und Betriebsschaltung nach Anspruch 1, bei der der Digitalprozessor umfaßt:

- einen ersten, einen zweiten und einen dritten digitalen Bandpaß (bp1, bp2, bp3),

-- die dem ersten bzw. zweiten bzw. dritten Analog/Digital-Wandler (aw1, aw2, aw3) nachgeschaltet sind,
-- die untereinander einen identischen Aufbau haben,
-- deren untere bzw. obere Grenzfrequenz kleiner als die kleinste bzw. größer als die größte auftretende Frequenz der Schwingungen des Meßrohrs (4) ist und
-- die Ausgangssignale abgeben, in denen ein den Wert der momentanen mechanischen Schwingfrequenz repräsentierndes Digital-Signal enthalten ist,

- eine erste digitale Amplitudenmeßstufe (dd1),

-- die dem dritten Bandpaß (bp3) nachgeschaltet ist,
-- mit einem Ausgang, an dem ein Digital-Signal auftritt, das solange konstant ist, wie die Amplitude des Ausgangssignals des dritten Bandpasses konstant ist, und das mit dieser Amplitude identisch ist,

- eine auf den ersten Bandpaß folgende erste digitale 90°-Phasenschieber- und Normierstufe (ps1),
- eine auf den dritten Bandpaß folgende zweite digitale 90°-Phasenschieber- und Normierstufe (ps2),
- einen digitalen Phasenmesser (pm)

-- mit einem ersten Eingang (e1), der der ersten Amplitudenmeßstufe (dd1) nachgeschaltet ist,
-- mit einem zweiten Eingang (e2), der dem zweiten Bandpaß (bp2) nachgeschaltet ist, und
-- mit einem dritten Eingang (e3), der der zweiten 90°-Phasenschieber- und Normierstufe (ps2) nachgeschaltet ist,

- einen zweiten digitalen Amplitudenregler (ar2)

-- mit einem ersten Eingang, der der ersten 90°-Phasenschieber- und Normierstufe nachgeschaltet ist,
-- mit einem zweiten Eingang, der mit dem Ausgang des zweiten Bandpasses (bp2) verbunden ist,
-- mit einem Ausgang, der mit dem Eingang des ersten Digital/Analog-Wandlers (dw1) verbunden ist, und

- eine Rechenstufe (rs) zur Berechnung des Massedurchflußsignals (m) und/oder des Dichtesignals (d)

-- mit einem ersten Eingang, der am Ausgang des Phasenmessers (pm) liegt,
-- mit einem zweiten Eingang, der mit dem vierten Ausgang (a4) des Digital-Generators (dg) verbunden ist,
-- mit einem ersten Ausgang, an dem das digitale Massedurchflußsignal (m) abnehmbar ist, und
-- mit einem zweiten Ausgang, an dem das digitale Dichtesignal (d) abnehmbar ist.

3. Meß- und Betriebsschaltung nach Anspruch 1 oder 2 mit einem Massedurchflußaufnehmer, der einen ersten Temperaturfühler (19) zur Messung der Meßrohr-Temperatur und einen zweiten Temperaturfühler (20) zur Messung der Temperatur des Trägerrohr oder des Tragrahmens enthält und die ferner umfaßt:

- einen ersten und einen zweiten Vergleichswiderstand (29, 30),
- eine zweite Summierstufe (ss2), von der ein erster Eingangs/Ausgangs-Pfad zwischen dem ersten Verstärker (v1) und dem dritten Analog/Digital-Wandler (aw3) eingefügt ist,
- einen Generator (sg) für ein analoges Sinussignal, dessen Frequenz außerhalb des Schwingfrequenz-Bereichs des Meßrohrs bzw. der Meßrohre liegt und dem ein Widerstand (R) nachgeschaltet ist,
- einen Multiplexer (mx) zur von einem Taktgenerator (cm) zyklisch getakteten Durchschaltung des ersten und

EP 0 866 319 B1

des zweiten Temperaturfühlers (19, 20) sowie des ersten und des zweiten Vergleichswiderstands (29, 30) zu einem zweiten Eingang der zweiten Summierstufe (ss2) unter Bildung eines jeweiligen Spannungsteilers mit dem Widerstand (R),
- einen dem Ausgang des dritten Analog/Digital-Wandlers (aw3) nachgeschalteten schmalbandigen vierten Bandpaß (bp4), dessen Durchlaßbereich die Frequenz des analogen Sinussignals umfaßt,
- eine zweite digitale Amplitudenmeßstufe (dd2),

-- mit einem Signal-Eingang, der dem vierten Bandpaß (bp4) nachgeschaltet ist,
-- mit einem Ausgang, an dem ein Digital-Signal auftritt, das solange konstant ist, wie die Amplitude des Ausgangs-Signals des vierten Bandpasses konstant ist, und das mit dieser Amplitude identisch ist, und

- eine Temperatursignal-Trennstufe (tt),

-- von der ein Signal-Eingang am Ausgang der zweiten Amplitudenmeßstufe (dd2) liegt,
-- von der ein Steuer-Eingang am Ausgang des Taktgenerators (cm) liegt,
-- mit einem ersten Ausgang, an dem ein der vom ersten Temperaturfühler (19) gemessenen Temperatur entsprechendes Digital-Signal auftritt und der mit einem dritten Eingang der Rechenstufe (rs) verbunden ist, sowie
-- mit einem zweiten Ausgang, an dem ein der vom zweiten Temperaturfühler (20) gemessenen Temperatur entsprechendes Digital-Signal auftritt und der mit einem vierten Eingang der Rechenstufe (rs) verbunden ist,
-- an deren erstem Ausgang ein temperatur-kompensiertes digitales Massedurchflußsignal (m') und
-- an deren zweitem Ausgang ein temperatur-kompensiertes digitales Dichtesignal (d') abnehmbar ist.

4. Meß- und Betriebsschaltung nach Anspruch 3, die umfaßt:

- eine dritte Summierstufe (ss3), von der ein erster Eingangs/Ausgangs-Pfad zwischen der Differenzstufe (ds) und dem zweiten Analog/Digital-Wandler (aw2) eingefügt ist und von der ein zweiter Eingang am Ausgang des Multiplexers (mx) liegt,
- einen dem Ausgang des zweiten Analog/Digital-Wandlers (aw2) nachgeschalteten fünften Bandpaß (bp5), dessen Aufbau mit dem des vierten Bandpasses (bp4) identisch ist,
- eine dritte digitale Amplitudenmeßstufe (dd3) mit einem Signal-Eingang, der dem fünften Bandpaß (bp5) nachgeschaltet ist, und
- eine Unsymmetrie-Meßstufe (ns)

-- mit einem am Ausgang der dritten Amplitudenmeßstufe (dd3) liegenden Dividend-Eingang,
-- mit einem am Ausgang der zweiten Amplitudenmeßstufe (dd2) liegenden Divisor-Eingang und
-- mit einem an einem vierten Eingang (e4) des Phasenmessers (pm) liegenden Ausgang.

**Claims**

1. A measuring and operating circuit of a Coriolis-type mass flow meter having a mass flow sensor (1) which has at least one measuring tube (4)

- through which a fluid to be measured flows,
- which vibrates in operation at a vibration frequency which is prescribed by its material and its dimensions but varied by the density of the fluid and which is equal to the instantaneous mechanical resonant fre-quency of the measuring tube or adjacent to this fre-quency,
- on which there are arranged a first and a second electromagnetic vibration sensor (17, 18), spaced apart from one another in the flow direction, as well as a vibration exciter (16), and
- which is surrounded by a support frame or a support tube (15),

having a measuring subcircuit which comprises:

- a first amplifier (v1) having a gain permanently set and amplifying the signal (X17) of the first vibration sensor,
- a second amplifier (v2) having a gain control input and amplifying the signal (X18) of the second vibration sensor,

16

- a first summing stage (s1) for the output signals of the first and second amplifiers,
- an integrating stage (ig) which follows the first summing stage and whose output signal is phase-shifted by 90° with respect to the output signal of the first summing stage,
- a difference stage (ds) for the output signals of the first and second amplifiers,
- a first analog-to-digital converter (aw1) following the integrating stage,
- a second analog-to-digital converter (aw2) following the difference stage,
- a third analog-to-digital converter (aw3) following the first amplifier,
- a clock oscillator (c1) for generating a sampling signal which synchronously clocks the first, second and third analog-to-digital converters,
- a digital processor (dp) which is follos the first, second and third analog-to-digital converters and which generates a digital mass flow rate signal (m) at a first output and/or a digital density signal (d) at a second output as well as a gain control signal (v) at a third output,

  -- which is fed to a first digital-to-analog converter (dw1) whose output is connected to the gain control input of the second amplifier, and

  having an exciting subcircuit which comprises:
- a digital generator (dg)

  -- having a frequency control input,
  -- having an amplitude control input,
  -- having a first output (a1) for a digital exciting signal,
  -- having a second output (a2) for a digital first sine signal (sn1),
  -- having a third output (a3) for a digital first cosine signal (cn1), and
  -- having a fourth output (a4), for a digital signal representing the instantaneous vibration frequency, which is connected to an input of the digital processor,

- a digital frequency controller (fr)

  -- having a first input, which is connected to the second output of the digital generator,
  -- having a second input, which is connected to the fourth output of the digital processor, and
  -- having an output which is connected to the frequency control input of the digital generator,

- a first digital amplitude controller (ar1)

  -- having a first input, which is connected to a fifth output of the digital processor,
  -- having a second input, which is fed a digital amplitude-setting signal (am), and
  -- having an output which is connected to the amplitude control input of the digital generator, and

- a second digital-to-analog converter (dw2),

  -- which follows the first output of the digital generator, and
  -- which drives an analog output stage (1s) feeding the vibration exciter.

2. The measuring and operating circuit as claimed in claim 1 wherein the digital processor comprises:

   - a first, a second and a third digital bandpass filter (bp1, bp2, bp3),

     -- which follows the first, second and third analog-to-digital converters (aw1, aw2, aw3), respectively
     -- which are all of identical design,
     -- whose lower and upper cut-off frequency is lower than the lowest and higher than the highest occurring frequency of the vibrations of the measuring tube (4), respectively, and
     -- which deliver output signals which contain a digital signal representing the value of the instantaneous mechanical vibration frequency,

   - a first digital amplitude-measuring stage (dd1)

     -- following the third bandpass filter (bp3) and

--      having an output at which a digital signal occurs which is constant as long as the amplitude of the output signal of the third bandpass filter is constant, and which is identical to this amplitude,

-      a first digital 90°-phase-shifting and normalizing stage (ps1) following the first bandpass filter,
-      a second digital 90°-phase-shifting and normalizing stage (ps2) following the third bandpass filter,
-      a digital phase meter (pm)

--      having a first input (e1), which follows the first amplitude-measuring stage (dd1),
--      having a second input (e2), which follows the second bandpass filter (bp2), and
--      having a third input (e3), which follows the second 90°-phase-shifting and normalizing stage (ps2),

-      a second digital amplitude controller (ar2)

--      having a first input, which follows the first 90°- phase-shifting and normalizing stage,
--      having a second input, which is connected to the output of the second bandpass filter (bp2), and
--      having an output, which is connected to the input of the first digital-to-analog converter (dw1), and

-      an arithmetic stage (rs) for calculating the mass flow rate signal (m) and/or the density signal (d)

--      having a first input which is connected to the output of the phase meter (pm),
--      having a second input, which is connected to the fourth output (a4) of the digital generator (dg),
--      having a first output, at which the digital mass flow rate signal (m) can be tapped, and
--      having a second output, at which the digital density signal (d) can be tapped.

3.   The measuring and operating circuit as claimed in claim 1 or 2 wherein the mass flow rate sensor comprises a first temperature sensor (19) for measuring the temperature of the measuring tube, and a second temperature sensor (20) for measuring the temperature of the support tube or of the support frame, and the measuring and operating circuit further comprises:

-      a first and a second reference resistor (29, 30),
-      a second summing stage (ss2) from which a first input/output/path is inserted between the first amplifier (v1) and the third analog-to-digital converter (aw3),
-      a generator (sg) for an analog sine signal whose frequency is outside the vibration frequency range of the meas-uring tube or of the measuring tubes, and which is followed by a resistor (R),
-      a multiplexer (mx) for switching through, in a fashion cyclically clocked by a clock generator (cm), the first and second temperature sensors (19, 20) as well as the first and second reference resistors (29, 30) to a second input of the second summing stage (ss2), thereby forming a respective voltage divider with the resistor (R),
-      a narrow-band fourth digital bandpass filter (bp4), which follows the output of the third analog-to-digital converter (aw3) and whose passband comprises the frequency of the analog sine signal,
-      a second digital amplitude-measuring stage (dd2)

--      having a signal input which follows the fourth bandpass filter (bp4), and
--      having an output at which a digital signal occurs which is constant as long as the amplitude of the output signal of the fourth bandpass filter is constant and which is identical to this amplitude, and

-      a temperature signal separator stage (tt),

--      of which a signal input is connected to the output of the second amplitude-measuring stage (dd2),
--      of which a control input is connected to the output of the clock generator (cm),
--      having a first output, at which a digital signal corresponding to the temperature measured by the first temperature sensor (19) occurs and which is connected to a third input of the arithmetic stage (rs), and
--      having a second output, at which a digital signal corresponding to the temperature measured by the second temperature sensor (20) occurs and which is connected to a fourth input of the arithmetic stage (rs),
--      at whose first output a temperature-compensated digital mass flow rate signal (m') can be tapped, and
--      at whose second output a temperature-compensated digital density signal (d') can be tapped.

4.   The measuring and operating circuit as claimed in claim 3 further comprising:

- a third summing stage (ss3), from which a first input/output path is inserted between the difference stage (ds) and the second analog-to-digital converter (aw2) and of which a second input is connected to the output of the multiplexer (mx),
- a fifth digital bandpass filter (bp5), which is connected to the output of the second analog-to-digital converter (aw2) and whose design is identical to that of the fourth bandpass filter (bp4),
- a third digital amplitude-measuring stage (dd3), having a signal input which follows the fifth bandpass filter (bp5), and
- an asymmetry-measuring stage (ns)

-- having a dividend input connected to the output of the third amplitude-measuring stage (dd3),
-- having a divisor input connected to the output of the second amplitude-measuring stage (dd2), and
-- having an output connected to a fourth input (e4) of the phase meter (pm).

**Revendications**

1. Montage de mesurage et de fonctionnement d'un dispositif de mesure de l'écoulement des masses de Coriolis comportant un détecteur d'écoulement des masses (1), qui présente au moins un tube de mesure (4) traversé par le fluide à mesurer,

- qui en fonctionnement oscille à une fréquence d'oscillation qui est prédéfinie par son matériau et ses dimensions mais qui varie selon la densité du fluide, et qui est égale à la fréquence de résonance mécanique instantanée du tube de mesure, ou en est proche,

- sur lequel sont disposés un premier et un deuxième capteurs d'oscillations électromagnétiques (17, 18), espacés l'un de l'autre dans le sens de l'écoulement, ainsi qu'un oscillateur (16), et

- qui est entouré d'un cadre porteur ou d'un tube porteur (15)

comportant un sous-montage mesureur qui comprend :

- un premier amplificateur (v1) à réglage fixe de l'amplification pour le signal (X17) du premier capteur d'oscillations,

- un deuxième amplificateur (v2) pour le signal (X18) du deuxième capteur d'oscillations avec une entrée de commande d'amplification,

- un premier étage sommateur (ss1) pour les signaux de sortie des deux amplificateurs,

- un étage intégrateur (ig) monté en aval du premier étage sommateur, et dont le signal de sortie présente un décalage de phase de 90° par rapport au signal de sortie du premier étage sommateur,

- un étage différentiateur (ds) pour les signaux de sortie des deux amplificateurs,

- un premier convertisseur analogique/numérique (aw1) monté en aval de l'étage intégrateur,

- un deuxième convertisseur analogique/numérique (aw2) monté en aval de l'étage différentiateur,

- un troisième convertisseur analogique/numérique (aw3) monté en aval du premier amplificateur,

- un oscillateur de synchronisation (cl) pour l'émission d'un signal de balayage synchronisé sur l'un des trois convertisseurs analogique/numérique,

- un processeur numérique (dp) qui est monté en aval des premier, deuxième et troisième convertisseurs analogique/numérique, et qui produit un signal numérique d'écoulement des masses (m) à une première sortie et/ou un signal numérique de densité (d) à une deuxième sortie, ainsi qu'un signal de commande d'amplification (v) à une troisième sortie,

-- qui est amené à un premier convertisseur numérique/analogique (dw1), dont la sortie est connectée à l'entrée de commande d'amplification du deuxième amplificateur, et

comportant un sous-montage d'excitation qui comprend :

- un générateur numérique (dg)

  -- comportant une entrée de commande de fréquence,

  -- comportant une entrée de commande d'amplitude,

  -- comportant une première sortie (a1) émettant un signal numérique d'excitation,

  -- comportant une deuxième sortie (a2) émettant un premier signal numérique sinus (sn1),

  -- comportant une troisième sortie (a3) émettant un premier signal numérique cosinus (cn1) et

  -- comportant une quatrième sortie (a4) émettant un signal numérique représentant la fréquence d'oscillation instantanée, et qui est connectée à une entrée du processeur numérique,

- un régulateur numérique de fréquence (fr)

  -- comportant une première entrée qui est connectée à la deuxième sortie du générateur numérique,

  -- comportant une deuxième entrée qui est connectée à la quatrième sortie du processeur numérique,

  -- comportant une sortie qui est connectée à l'entrée de commande de fréquence du générateur numérique,

- un premier régulateur numérique d'amplitude (ar1)

  -- comportant une première entrée qui est connectée à une cinquième sortie du processeur numérique,

  -- comportant une deuxième entrée à laquelle est amené un signal numérique de réglage d'amplitude (am),

  -- comportant une sortie qui est connectée à l'entrée de commande d'amplitude du générateur numérique,

- ainsi qu'un deuxième convertisseur numérique/analogique (dw2),

  -- qui est monté en aval de la première sortie du générateur numérique et

  -- qui commande un étage final analogique (1s) qui alimente l'oscillateur.

2. Montage de mesurage et de fonctionnement selon la revendication 1, dans lequel le processeur numérique comprend :

   - un premier, un'deuxième et un troisième passe-bande numérique (bp1, bp2, bp3),

     -- qui sont montés respectivement en aval du premier, du deuxième et du troisième convertisseur analogique/numérique (aw1, aw2, aw3),

     -- qui ont une structure identique les uns par rapport aux autres,

     -- dont les limites de fréquence inférieure et supérieure sont respectivement plus petite que la plus petite et plus grande que la plus grande fréquence d'oscillation du tube de mesure (4) et

     -- qui émettent des signaux de sortie dans lesquels est contenu un signal numérique représentant la valeur de la fréquence d'oscillation mécanique instantanée,

- un premier étage numérique de mesure d'amplitude (dd1)

  -- qui est monté en aval du troisième passe-bande (bp3),

  -- comportant une sortie où apparaît un signal numérique qui est constant tant que l'amplitude du signal de sortie du troisième passe-bande est constante, et qui est identique à cette amplitude,

- un premier étage numérique de quadrature de phase et de normalisation (ps1) suivant le troisième passe-bande,

- un deuxième étage numérique de quadrature de phase et de normalisation (ps2) suivant le troisième passe-bande,

- un indicateur de phase numérique (pm)

  -- comportant une première entrée (e1) qui est montée en aval du premier étage de mesure d'amplitude (dd1),

  -- comportant une deuxième entrée (e2) qui est montée en aval du deuxième passe-bande (bp2),

  -- comportant une troisième entrée (e3) qui est montée en aval du deuxième étage de quadrature de phase et de normalisation (ps2)

- un deuxième régulateur numérique d'amplitude (ar2)

  -- comportant une première entrée qui est montée en aval du premier étage de quadrature de phase et de normalisation,

  -- comportant une deuxième entrée qui est connectée à la sortie du deuxième passe-bande (bp2),

  -- comportant une sortie qui est connectée à l'entrée du premier convertisseur numérique/analogique (dw1) et

- un étage calculateur (rs) pour le calcul du signal d'écoulement des masses (m) et/ou du signal de densité (d)

  -- comportant une première entrée qui se trouve à la sortie de l'indicateur de phase (pm),

  -- comportant une deuxième entrée qui est connectée à la quatrième sortie (a4) du générateur numérique (dg),

  -- comportant une première sortie où peut être capté le signal numérique d'écoulement des masses (m) et

  -- comportant une deuxième sortie où peut être capté le signal numérique de densité (d).

3. Montage de mesurage et de fonctionnement selon les revendications 1 ou 2, comportant un détecteur d'écoulement des masses qui contient un premier capteur de température (19) pour la mesure de la température du tube de mesure, et un deuxième capteur de température (20) pour la mesure de la température du tube porteur ou du cadre porteur, et qui comprend en outre :

- une première et une deuxième résistance de comparaison (29, 30),

- un deuxième étage sommateur (ss2), dont un premier chemin d'entrée/sortie est inséré entre le premier amplificateur (v1) et le troisième convertisseur analogique/numérique (aw3),

- un générateur (sg) pour un signal analogique sinusoïdal, dont la fréquence se situe hors de la gamme des fréquences d'oscillation du tube de mesure et/ou des tubes de mesure, et qui est monté en aval d'une résistance (R),

- un multiplexeur (mx) pour la commutation synchronisée en cycles par un synchroniseur (cm) du premier et du deuxième capteur de température (19, 20) ainsi que de la première et de la deuxième résistance de comparaison (29, 30) vers une deuxième entrée du deuxième étage sommateur (ss2) par la formation chaque fois d'un diviseur de tension avec la résistance (R),

- un quatrième passe-bande (bp4) à bande étroite monté en aval de la sortie du troisième convertisseur analogique/numérique (aw3), et dont la bande passante comprend la fréquence du signal analogique sinusoïdal,

- un deuxième étage numérique de mesure d'amplitude (dd2),

-- comportant une entrée de signaux qui est montée en aval du quatrième passe-bande (bp4),

-- comportant une sortie où apparaît un signal numérique qui est constant tant que l'amplitude du signal de sortie du quatrième passe-bande est constante, et qui est identique à cette amplitude et

- un étage séparateur du signal de température (tt),

-- dont une entrée de signaux se trouve à la sortie du deuxième étage de mesure d'amplitude (dd2),

-- dont une entrée de commande se trouve à la sortie du synchroniseur (cm),

-- comportant une première sortie où apparaît un signal numérique correspondant à la température mesurée par le premier capteur de température (19), et qui est connectée à une troisième entrée de l'étage calculateur (rs) et

-- comportant une deuxième sortie où apparaît un signal numérique correspondant à la température mesurée par le deuxième capteur de température (20), et qui est connectée à une quatrième entrée de l'étage calculateur (rs),

-- à une première sortie duquel un signal numérique d'écoulement des masses (m') compensé en température peut être reçu et

-- à une deuxième sortie duquel un signal numérique de densité (d') compensé en température peut être reçu.

4. Montage de mesurage et de fonctionnement selon la revendication 3, comprenant :

- un troisième étage sommateur (ss3), dont un premier chemin d'entrée/sortie est inséré entre l'étage différenciateur (ds) et le deuxième convertisseur analogique/numérique (aw2), et dont une deuxième entrée se trouve à la sortie du multiplexeur (mx) ,

- un cinquième passe-bande (bp5) monté en aval de la sortie du deuxième convertisseur analogique/numérique (aw2), dont la structure est identique à celle du quatrième passe-bande (bp4),

- un troisième étage numérique de mesure d'amplitude (dd3) comportant une entrée de signaux, qui est monté en aval du cinquième passe-bande (bp5), et

- un étage de mesure d'asymétrie (ns)

-- comportant une entrée dividende se trouvant à la sortie du troisième étage de mesure d'amplitude (dd3),

-- comportant une entrée diviseur se trouvant à la sortie du deuxième étage de mesure d'amplitude (dd2) et

-- comportant une sortie se trouvant à la quatrième entrée (e4) de l'indicateur de phase (pm).

Fig. 1

Fig.2

EP 0 866 319 B1

Fig.3

Fig.4

Fig.5

Fig.6

Fig.7

Fig.8

Fig.9

sn1

vs2

mp6

tp4

ps1

sb1

+

−

zr

pi1

dg

bp1

sb2

+

−

am

pi2

dg

Fig.10

Fig.11

ar1

mp7

a1

sg1

fr

a2

sn1

cg1

a3

cn1

kf

a4

sg2

a5

sn2

cg

cg2

a6

cn2

29

Fig.12

Fig.13

Fig.14